(19) Europäisches Patentamt
European Patent Office
Office européen des brevets

(11) **EP 3 076 513 B1**

(12) **EUROPEAN PATENT SPECIFICATION**

(45) Date of publication and mention
of the grant of the patent:
**16.12.2020 Bulletin 2020/51**

(21) Application number: **15755028.6**

(22) Date of filing: **23.02.2015**

(51) Int Cl.:
*H02J 3/00* (2006.01)    *G06Q 50/06* (2012.01)
*H02J 7/00* (2006.01)    *B60L 53/67* (2019.01)
*G08G 1/01* (2006.01)    *B60L 3/12* (2006.01)
*G06Q 30/02* (2012.01)    *G08G 1/00* (2006.01)
*G07C 5/00* (2006.01)    *G06Q 10/04* (2012.01)
*B60L 53/14* (2019.01)    *B60L 53/30* (2019.01)
*B60L 53/63* (2019.01)    *B60L 53/65* (2019.01)
*B60L 58/12* (2019.01)    *G06Q 50/30* (2012.01)

(86) International application number:
**PCT/JP2015/054995**

(87) International publication number:
**WO 2015/129613 (03.09.2015 Gazette 2015/35)**

(54) **ELECTRICITY-DEMAND PREDICTION DEVICE, ELECTRICITY SUPPLY SYSTEM, ELECTRICITY-DEMAND PREDICTION METHOD, AND PROGRAM**

ELEKTRIZITÄTSNACHFRAGEVORHERSAGEVORRICHTUNG, ELEKTRIZITÄTSBEREITSTELLUNGSSYSTEM, ELEKTRIZITÄTSNACHFRAGEVORHERSAGEVERFAHREN UND PROGRAMM

DISPOSITIF DE PRÉDICTION DE DEMANDE D'ÉLECTRICITÉ, SYSTÈME D'APPROVISIONNEMENT EN ÉLECTRICITÉ, PROCÉDÉ DE PRÉDICTION DE DEMANDE D'ÉLECTRICITÉ, ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.02.2014 JP 2014038747**

(43) Date of publication of application:
**05.10.2016 Bulletin 2016/40**

(73) Proprietor: **Mitsubishi Heavy Industries, Ltd.**
**Tokyo 108-8215 (JP)**

(72) Inventors:
• **YAMASHINA Yusuke**
**Tokyo 108-8215 (JP)**
• **KOYANAGI Yoko**
**Tokyo 108-8215 (JP)**

• **NIINOMI Toshihiko**
**Tokyo 108-8215 (JP)**
• **YANO Shinya**
**Tokyo 108-8215 (JP)**

(74) Representative: **Henkel & Partner mbB**
**Patentanwaltskanzlei, Rechtsanwaltskanzlei**
**Maximiliansplatz 21**
**80333 München (DE)**

(56) References cited:
WO-A1-2011/001595    WO-A1-2013/053413
WO-A2-2013/121291    JP-A- 2012 044 808
JP-A- 2012 115 066    JP-A- 2014 042 383
US-A1- 2011 246 252    US-A1- 2012 203 726
US-A1- 2013 063 283

**Description**

Technical Field

The present invention relates to an electricity-demand prediction device, an electricity supply system, an electricity-demand prediction method, and a program that predict the amount of electricity demand at a charging facility.
Priority is claimed on Japanese Patent Application No. 2014-038747, filed on February 28, 2014.

Background Art

In recent years, an electric car having a battery mounted therein or hybrid cars have become widespread, and accordingly, electricity demand at charging facilities has increased. Accordingly, a distribution planning technique for controlling a total amount of electrical energy to be generated according to a prediction result of electricity demand and an amount of electrical energy to be supplied according to areas and time periods has been used.
In order to predict electricity demand, generally, a technique of performing prediction by constructing a prediction model using a statistical method based on previous electricity demand records, time information, calendar information indicating days of the week, holidays or the like has been used, for example (for example, see Patent Literature 1).
Furthermore, in a case where electricity demand is predicted in a specific area, a technique of statistically analyzing group behavior trends in the specific area and modeling the group behavior trends has been used.

Citation List

Patent Literature

[PTL 1] Japanese Unexamined Patent Application Publication No. 2012-115066
US 2011/246252 A1 discloses a vehicle charging allocation managing system containing plural charging stations each having a battery charger to charge a vehicle, a charging station managing server for managing the charging stations, and a vehicle charging allocation managing server that is connected to the charging station managing server through a communication network, and instructs vehicle allocation to allocate each of the vehicles to an appropriate one of the charging stations for charging. The vehicle charging allocation managing server has a controller for setting a vehicle charging allocation schedule for specifying a charging station and a charging time zone to charge each of the vehicles on the basis of a battery residual capacity and a battery capacity consumption plan, thereby performing vehicle allocation for charging.

Summary of Invention

Technical Problem

However, for example, in a case where group behavior trends in a specific area are statistically analyzed, in order to construct models for reproducing features of all group behavior trends in a specific area with high accuracy, it is necessary to provide a large amount of record data (instructional data). On the other hand, since the number of probe cars (vehicles having a function of acquiring detailed traveling data) may be limited, it may not be possible to acquire a considerable amount of record data. Thus, it is difficult to reproduce group behavior trends in a specific area with high accuracy.
In order to solve the above-mentioned problems, an object of the invention is to provide an electricity-demand prediction device, an electricity supply system, an electricity-demand prediction method, and a program capable of performing electricity demand prediction with high accuracy based on limited record data.

Solution to Problem

Accordingly, there is provided an electricity-demand prediction device as set out in independent claim 1, an electricity supply system as set out in claim 5, an electricity-demand prediction method as set out in independent claim 6, and a program as set out in independent claim 7. Advantageous developments are defined in the dependent claims.
According to a first aspect of the invention, there is provided an electricity-demand prediction device (100) including: a data reception unit (101) that receives an input of vehicle probe data (D1) in which a traveling state of a specific vehicle (probe cars 201, 202, and so on) is recorded; an individual model generation unit (112) that generates an individual model (M1, M2, and so on) indicating a correlation between a record value of factor information indicating a decision-making factor for charging of the specific vehicle at a specific charging facility (301, 302, and so on) and a record value indicating electricity demand for the specific vehicle at the specific charging facility, with respect to the specific vehicle or a user of the specific vehicle, based on the received vehicle probe data (D1); and a demand prediction computation unit (113) that calculates a predicted value of electricity demand for the specific vehicle at the specific charging facility based on the generated individual model.

According to such an electricity-demand prediction device, individual models are generated according to users of electric cars, and a prediction process in which a decision-making feature in charging for each of the users is reflected is performed. Accordingly, it is possible to perform electricity demand prediction with high accuracy based on decisions of the users.

According to a second aspect of the invention, the individual model generation unit includes at least an operating rate, a presence proportion in a predetermined area, and a charging rate of a battery as the factor information.

According to such an electricity-demand prediction device, it is possible to acquire information indicating whether a user is driving a vehicle, which location the vehicle is present at, and which level a charging rate of a battery has decreased to, as the factor information which serves as the decision-making factor for charging.

Furthermore, according to a third aspect of the invention, the individual model generation unit extracts usage rate record data (D20) indicating usage rates of the specific vehicle at the specific charging facility according to time periods, as the record value of the electricity demand based on the received vehicle probe data.

According to such an electricity-demand prediction device, it is possible to predict a rate at which a specific charging facility will be in a specific time period as a predicted value of electricity demand.

Furthermore, according to a fourth aspect of the invention, the individual model generation unit constructs a lifestyle model (N1, N2, and so on) that includes a set of the plurality of individual models having similar correlations, and the demand prediction computation unit calculates, based on a distribution rate of a population corresponding to the lifestyle model for activists who are active in a specific area, a predicted value of electricity demand at each charging facility that belongs to the specific area.

According to such an electricity-demand prediction device, it is possible to predict usage rates of charging facilities according to the lifestyle models, and to adjust weights depending on distribution rates of population who belongs to the respective lifestyles at a specific area, with respect to the prediction result. Accordingly, it is possible to enhance the accuracy of electricity demand prediction in the entire area.

Furthermore, according to a fifth aspect of the invention, the data reception unit further receives an input of charging facility data which is information acquired from each charging facility, in which information relating to charging performed in the charging facility is recorded, and the individual model generation unit generates the individual model based on the charging facility data.

According to such an electricity-demand prediction device, it is possible to construct an individual model based on a variety of information relating to charging acquired at each charging facility in addition to vehicle probe data acquired from a specific vehicle. Thus, it is possible to generate an individual model in which decision-making in charging for individual users is reflected with high accuracy, to thereby enhance the accuracy of prediction.

Furthermore, according to a sixth aspect of the invention, there is provided an electricity supply system (1) including: a plurality of probe cars (201, 202, and so on) configured to record a traveling state of a host vehicle; and an electricity supply management device (400) that adjusts an electricity supply for each charging facility according to a prediction result of the above-described electricity-demand prediction device.

According to such an electricity supply system, since the electricity supply management device adjusts an electricity supply for each charging facility according to a highly accurate prediction result of the electricity-demand prediction device, it is possible to perform an electricity supply service management with higher efficiency.

Furthermore, according to a seventh aspect of the invention, there is provided an electricity-demand prediction method including the steps of: receiving an input of vehicle probe data in which a traveling state of a specific vehicle is recorded; generating an individual model indicating a correlation between a record value of factor information indicating a decision-making factor for charging of the specific vehicle at a specific charging facility and a record value indicating electricity demand for the specific vehicle at the specific charging facility, with respect to the specific vehicle or a user of the specific vehicle, based on the received vehicle probe data; and calculating a predicted value of electricity demand for the specific vehicle at the specific charging facility based on the generated individual model.

According to such an electricity-demand prediction method, individual models are generated according to users of electric cars, and a prediction process in which a decision-making feature in charging for each of the users is reflected is performed. Accordingly, it is possible to perform electricity demand prediction with high accuracy based on decisions of the users.

Furthermore, according to an eighth aspect of the invention, there is provided a program that causes a computer of an electricity-demand prediction device to function as: individual model generation means for generating, based on vehicle probe data in which a traveling state of a specific vehicle is recorded, an individual model indicating a correlation between a record value of factor information indicating a decision-making factor for charging of the specific vehicle at a specific charging facility and a record value indicating electricity demand for the specific vehicle at the specific charging facility, with respect to the specific vehicle or a user of the specific vehicle; and demand prediction computation means for calculating a predicted value of electricity demand for the specific vehicle at the specific charging facility based on the generated individual model.

According to such a program, the individual model generation means generates individual models according to users of electric cars, and performs a prediction process in which a decision-making feature in charging for each of the users is reflected. Accordingly, it is possible to perform electricity demand prediction with high accuracy based on decisions of the users.

Advantageous Effects of Invention

According to the above-described electricity-demand prediction device, the electricity supply system, the electricity-demand prediction method, and the program, it is possible to perform electricity demand prediction with higher accuracy based on limited record data.

Brief Description of Drawings

Fig. 1 is a diagram illustrating an outline of an electricity supply system according to a first embodiment.
Fig. 2 is a diagram illustrating a functional configuration of an electricity-demand prediction device according to the first embodiment.
Fig. 3 is a diagram illustrating details of vehicle probe data stored in a data accumulation unit according to the first embodiment.
Fig. 4 is a first diagram illustrating a function of an individual model generation unit according to the first embodiment.
Fig. 5 is a second diagram illustrating a function of the individual model generation unit according to the first embodiment.
Fig. 6 is a third diagram illustrating a function of the individual model generation unit according to the first embodiment.
Fig. 7 is a fourth diagram illustrating a function of the individual model generation unit according to the first embodiment.
Fig. 8 is a fifth diagram illustrating a function of the individual model generation unit according to the first embodiment.
Fig. 9 is a first diagram illustrating a function of a demand prediction computation unit according to the first embodiment.
Fig. 10 is a second diagram illustrating a function of the demand prediction computation unit according to the first embodiment.
Fig. 11 is a diagram illustrating a function of an individual model generation unit according to a modification example of the first embodiment.
Fig. 12 is a diagram illustrating a functional configuration of an electricity-demand prediction device according to a second embodiment.
Fig. 13 is a diagram illustrating a function of an individual model generation unit according to the second embodiment.
Fig. 14 is a diagram illustrating a function of an electricity-prediction computation unit according to the second embodiment.
Fig. 15 is a diagram illustrating a function of an electricity-prediction computation unit according to a modification example of the second embodiment.
Fig. 16 is a diagram illustrating a functional configuration of an electricity-demand prediction device according to a third embodiment.

Description of Embodiments

<First embodiment>

Hereinafter, an electricity supply system according to a first embodiment will be described.

The electricity supply system according to the first embodiment generates individual models obtained by modeling behaviors of individual users that use probe cars using vehicle probe data obtained from the probe cars. Further, the electricity supply system performs, using an individual model in which a feature of each individual user who represents activists (group) who are active in a specific area (for example, in a city) is reflected, prediction of electricity demand at each of charging facilities (in this embodiment, a "usage rate" of each charging facility) in the specific area. Here, the "activists" include residents who live in the specific area, and in addition, include entire people who perform various activities in the area for the purpose of commuting to work, commuting to school, pleasure trip, or the like.

(Overall configuration)

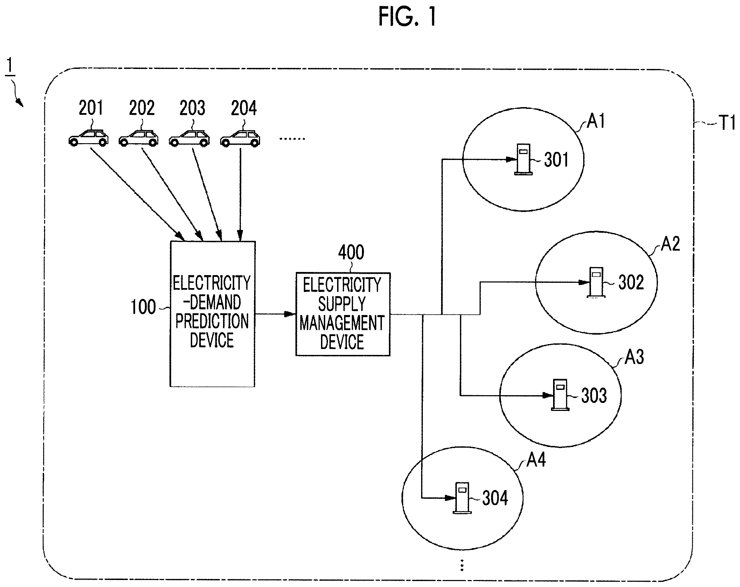

Fig. 1 is a diagram illustrating an outline of the electricity supply system according to the first embodiment.

An electricity supply system 1 according to the first embodiment includes an electricity-demand prediction device 100, plural probe cars 201, 202, and so on, plural charging facilities 301, 302, and so on, and an electricity supply management device 400.

The electricity supply system 1 provides electricity supply service for an electric car in a specific area (for example, in a city T1). Specifically, the electricity supply system 1 provides electricity for battery charging to an electric car that travels in the city T1 through the charging facilities 301, 302, and so on provided in respective locations of the city T1.

The electricity-demand prediction device 100 receives inputs of plural pieces of vehicle probe data D1 (which will be described later) from the respective probe cars 201, 202, and so on, and performs prediction of electricity demand (usage rates according to time periods) in each of the charging facilities 301, 302, and so on based on the vehicle probe data D1.

The probe cars 201, 202, and so on are electric cars used by specific users among residents who belong to the city T1. Each of the probe cars 201, 202, and so on is provided with an exclusive on-board device (not shown), and is able to record a traveling state of each of the probe cars 201, 202, and so on at a predetermined time interval. For example, each of the probe cars 201, 202, and so on is able to record operating state information indicating whether each of the probe cars 201, 202, and so on is being operated, vehicle position information (for example, latitude and longitude information obtained using a global positioning system (GPS)) for specifying each position, and state of charge (SOC) information indicating a charging rate [%] (remaining capacity) of a battery mounted therein, at a predetermined time interval (for example, every hour), as traveling states of each probe car.

Contents of the traveling states capable of being acquired by the probe cars 201, 202, and so on are not limited to the above-described information, and traveling distance information, speed and acceleration information acquired through speed and acceleration sensors mounted therein, or the like may be recorded. In addition, a variety of information during stop and during charging of the probe cars 201, 202, and so on may be recorded. Further, the probe cars 201, 202, and so on are not limited to a configuration in which respective traveling states are acquired "at a predetermined time interval", and may have a configuration in which respective traveling states are recorded when a specific event which is arbitrarily determined occurs. Specifically, for example, the probe cars 201, 202, and so on may record, at every predetermined traveling distance, or in every predetermined vehicle state change (change from a traveling state to a vehicle stop state, ON and OFF switching of a main power source, and ON and OFF switching of a headlight), respective traveling states at time points corresponding thereto.

The charging facilities 301, 302, and so on are installed at respective locations in the city T1. Users of electric cars perform charging of the electric cars in the charging facilities 301, 302, and so on installed at the respective locations. In this embodiment, as shown in Fig. 1, the charging facilities 301, 302, and so on are installed at respective locations of predetermined areas A1, A2, A3, and so on that belong to the city T1.

The electricity supply management device 400 makes a distribution plan so that electricity necessary for charging can be supplied from each of the charging facilities 301, 302, and so on, based on a prediction result of electricity demand (usage rates according to time periods with respect to each of the charging facilities 301, 302, and so on) by using the electricity-demand prediction device 100, in reflection of the prediction result.

(Functional configuration of electricity-demand prediction device)

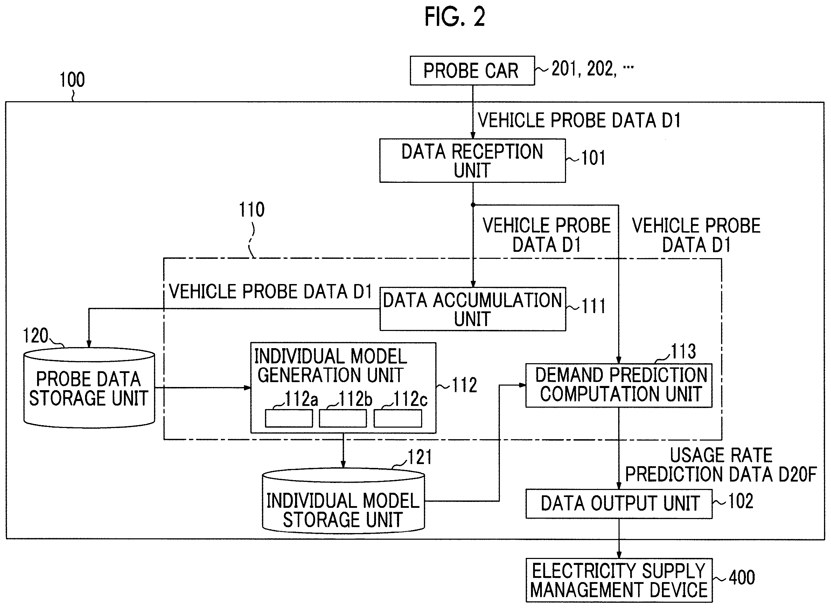

Fig. 2 is a diagram illustrating a functional configuration of the electricity-demand prediction device according to the first embodiment.

As shown in Fig. 2, the electricity-demand prediction device 100 according to this embodiment includes a data reception unit 101, a data output unit 102, a central processing unit (CPU) 110, a probe data storage unit 120, and an individual model storage unit 121.

The data reception unit 101 is a communication module that receives an input of the vehicle probe data D1 from each of the probe cars 201, 202, and so on. Here, the on-vehicle device of each of the probe cars 201, 202, and so on automatically outputs the acquired vehicle probe data D1 to the data reception unit 101 through predetermined communication means. Instead of a configuration in which each on-vehicle device automatically transmits the vehicle probe data D1 to the data reception unit 101, a user (manager) of the electricity supply system 1 may manually perform a process of transmitting the vehicle probe data D1 to the data reception unit 101 from each on-vehicle device.

The data output unit 102 is a communication module that outputs usage rate prediction data D20F obtained through a calculation process (which will be described later) of the CPU 110 to the electricity supply management device 400.

The CPU 110 is a versatile CPU that performs the entire processes of the electricity-demand prediction device 100. The CPU 110 is operated according to an exclusive program read in a storage area to realize functions as a data accumulation unit 111, an individual model generation unit 112, and a demand prediction computation unit 113. Details of the respective functions will be described later.

The probe data storage unit 120 is a storage area in which the acquired vehicle probe data D1 is stored through a process of the CPU 110 (data accumulation unit 111 (which will be described later)).

The individual model storage unit 121 is a storage area in which individual models of the probe cars 201, 202, and so on, generated by the CPU 110 (the individual model generation unit 112 (which will be described later)) are respectively stored.

The above-described probe data storage unit 120 and individual model storage unit 121 may have a configuration in which storage is performed in a single storage device.

As described above, the CPU 110 according to this embodiment includes functions as the data accumulation unit 111, the individual model generation unit 112, and the demand prediction computation unit 113.

The data accumulation unit 111 successively stores the vehicle probe data D1 input through the data reception unit 101 in the probe data storage unit 120. The content of the vehicle probe data D1 stored by the data accumulation unit 111 will be described later.

The individual model generation unit 112 performs a process of generating individual models M1, M2, and so on corresponding to the probe cars 201, 202, and so on (users P1, P2, and so on), based on previous vehicle probe data D1 accumulated in the probe data storage unit 120. Here, the "individual models" are simulation models in which features (particularly, decision-making features in charging) in usage of the probe cars 201, 202, and so on, of the respective users, are reflected. The individual model generation unit 112 stores the generated individual models M1, M2, and so on in the individual model storage unit 121.

Further, as shown in Fig. 2, the individual model generation unit 112 generates individual models based on processes of a factor information extraction unit 112a, an electricity demand information extraction unit 112b, and a model construction unit 112c provided therein. Specific processing contents of the factor information extraction unit 112a, the electricity demand information extraction unit 112b, and the model construction unit 112c will be described later.

The demand prediction computation unit 113 calculates predicted values (usage rate prediction data D20F) of usage rates according to respective time periods in each of the charging facilities 301, 302, and so on, based on the individual models M1, M2, and so on stored in the individual model storage unit 121 and newly input vehicle probe data D1.

(Function of data accumulation unit)

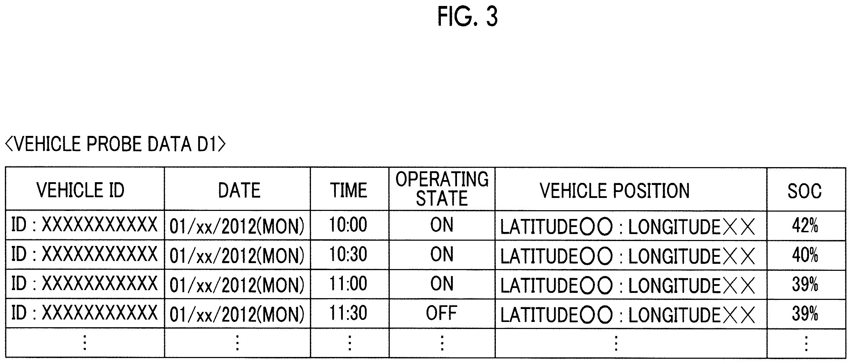

Fig. 3 is a diagram illustrating details of vehicle probe data stored by the data accumulation unit according to the first embodiment.

As described above, the data accumulation unit 111 successively stores and accumulates the vehicle probe data D1 acquired in the respective probe cars 201, 202, and so on in the probe data storage unit 120. For example, the data accumulation unit 111 stores the vehicle probe data D1 in the form of a configuration as shown in Fig. 3. Specifically, as shown in Fig. 3, in the probe data storage unit 120, a vehicle ID for identifying each of the probe cars 201, 202, and so on, a date and a time period, operating state information indicating whether each vehicle is being operated (whether the vehicles are being driven), latitude and longitude information for specifying a position of the vehicle, and SOC information indicating a charging rate (remaining capacity) of a battery mounted therein are recorded. The data accumulation unit 111 extracts the operating state information, the latitude and longitude information, and the SOC information, for example, every 30 minutes to store the results in the probe data storage unit 120.

In the probe data storage unit 120, one or more pieces of vehicle probe data D1 which are previously acquired by each of the probe cars 201, 202, and so on are stored. It is preferable that plural sets of a variety of information over previous several months to several years are stored and accumulated as the vehicle probe data D1, for example.

Further, a configuration of the vehicle probe data D1 stored in the probe data storage unit 120 is not limited to the configuration shown in Fig. 3, and a configuration in which other items (for example, traveling distance information, speed and acceleration information, or the like) relating to traveling of the probe cars 201, 202, and so on is recorded may be used. Further, a configuration in which charging facility IDs to be acquired in charging are stored and it is determined which one of the charging facilities 301, 302, and so on charging is performed through may be used.

(Function of individual model generation unit)

The factor information extraction unit 112a of the individual model generation unit 112 extracts factor record data D10 which is a record value of factor information with reference to the vehicle probe data D1 (Fig. 3) stored in the probe data storage unit 120. Here, the "factor information" refers to a variety of information which may be a decision-making factor for performing charging in the respective charging facilities 301, 302, and so on by users P1, P2, and so on of the probe cars 201, 202, and so on. Specifically, the factor information extraction unit 112a extracts time period operating rate data D11, time period activation area D12, or the like, which will be described below, from the vehicle probe data D1, as the factor information record value (factor record data D10).

(Time period operating rate data)

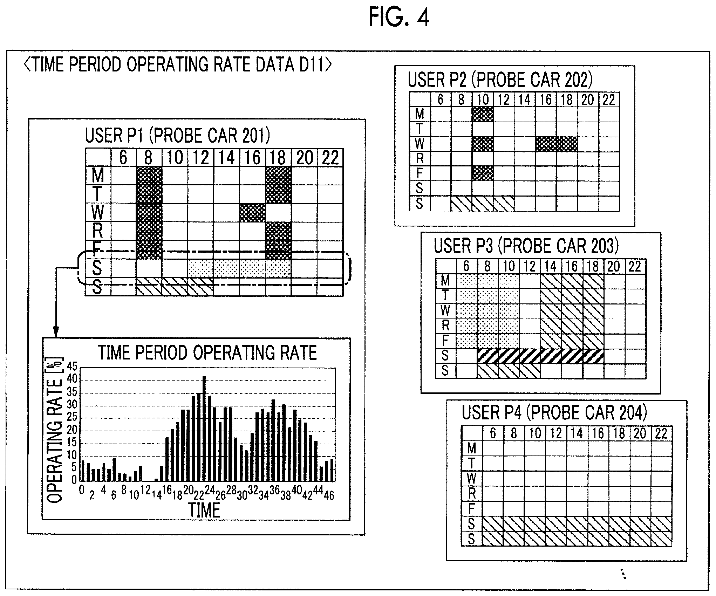

Fig. 4 is a first diagram illustrating a function of the individual model generation unit according to the first embodiment.

The factor information extraction unit 112a extracts the time period operating rate data D11 which belongs to the factor record data D10 from the vehicle probe data D1 stored in the probe data storage unit 120. Here, as shown in Fig. 4, the time period operating rate data D11 is information dividedly indicating rates at which users perform operations of the probe cars 201, 202, and so on (rates at which the probe cars 201, 202, and so on are being driven) according to time periods for a predetermined period of time (for example, one week). Specifically, the factor information extraction unit 112a calculates rates at which the vehicles are being operated on a specific day of the week and in a specific time period, with reference to operating state information on the day of the week and in the time period (Fig. 3), from previous vehicle probe data D1 which is accumulated in the probe data storage unit 120, to obtain the time period operating rate data D11.

In Fig. 4, for example, time period operating rates are shown over one week, but for example, the time period operating rates may be shown over one month or one year instead of one week. Further, this is similarly applied to "time period activity area data", "time period SOC data", or the like which will be described below.

Fig. 4 shows the time period operating rate data D11 extracted based on the vehicle probe data D1 of the user P1 (probe car 201). For example, the user P1 shows a trend of a high operating rate in a time period for commuting to work (around 8 a.m. and around 6 p.m. from Monday to Friday). Accordingly, it is estimated that the user P1 mainly uses the probe car 201 for commuting to work.

The factor information extraction unit 112a extracts the time period operating rate data D11 with respect to other users P2, P3, and so on (the probe cars 202, 203, and so on), in a similar way.

(Time period activity area data)

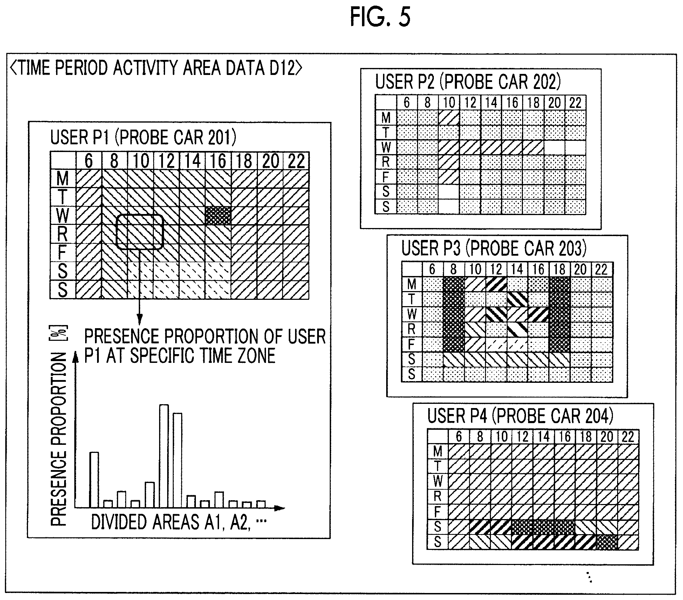

Fig. 5 is a second diagram illustrating a function of the individual model generation unit according to the first embodiment.

The factor information extraction unit 112a extracts the time period action area data D12 which belongs to the factor record data D10 from the vehicle probe data D1 stored in the probe data storage unit 120. Here, as shown in Fig. 5, the time period activity area data D12 is information dividedly indicating areas (divided areas A1, A2, and so on) to which the users (probe cars 201, 202, and so on) belong according to time periods for one week. Specifically, the factor information extraction unit 112a obtains the time period activity area data D12 in which rates at which the users P1, P2, and so on (probe cars 201, 202, and so on) are present in each of predetermined areas (each of divided areas A1 and A2) on each day of the week and in each time period are specified, with reference to latitude and longitude information on the day of the week and in the time period (Fig. 3), from previous vehicle probe data D1 which is accumulated in the probe data storage unit 120 (see Fig. 5).

(SOC data according to time periods)

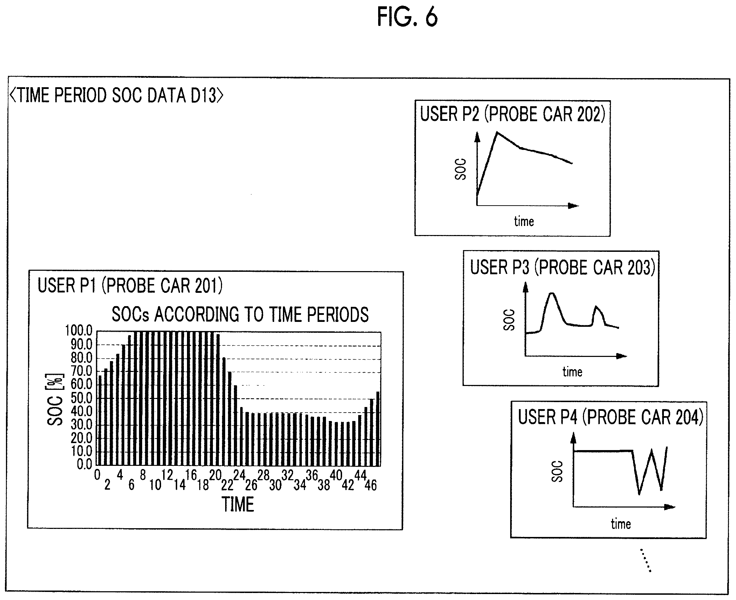

Fig. 6 is a third diagram illustrating a function of the individual model generation unit according to the first embodiment.

The factor information extraction unit 112a further extracts time period SOC data D13 or the like which belongs to the factor record data D10 from the vehicle probe data D1 stored in the probe data storage unit 120. Here, the time period SOC data D13 is information obtained by recording SOCs [%] of users (probe cars 201, 202, and so on) according to time periods through a predetermined sensor, as shown in Fig. 6. Thus, as described later, the individual model generation unit 112 may acquire the trend of an individual behavior of each user (decision-making feature in charging) indicating the level of reduction of an SOC at which charging is performed.

Further, the factor information extraction unit 112a may further extract the factor record data D10 other than the above-described data. For example, the factor information extraction unit 112a may specify which one of the charging facilities 301, 302, and so on charging is performed through, with reference to vehicle positions and SOCs according to time periods in the vehicle probe data D1, and may acquire charger usage location data D14 indicating statistics of the charging facilities 301, 302, and so on used by the users P1, P2, and so on (see Fig. 6). Thus, it is possible to determine the charging facilities 301, 302, and so on which are preferentially used by the users P1, P2, and so on. In a case where charging facility IDs are recorded in the vehicle probe data D1, the number of times of usage or the like for each charging facility ID may be extracted to acquire the charger usage location data D14.

Further, although not shown in Fig. 6, the factor information extraction unit 112a may further extract charging time period information D15 indicating time periods (time periods when SOCs are restored) when charging is performed, charging speed information D16 calculated from the amount of SOC increase per unit time, or the like, with reference to SOCs according to time periods in the vehicle probe data D1. Thus, for example, it is possible to determine time periods at which the users P1, P2, and so on preferentially use the charging facilities 301, 302, and so on, and to determine whether the users P1, P2, and so on frequently perform rapid charging based on the charging speed information D16.

The individual model generation unit 112 according to the first embodiment extracts the factor record data D10 that includes previous record values of plural pieces of factor information, as described above.

(Usage rate record data)

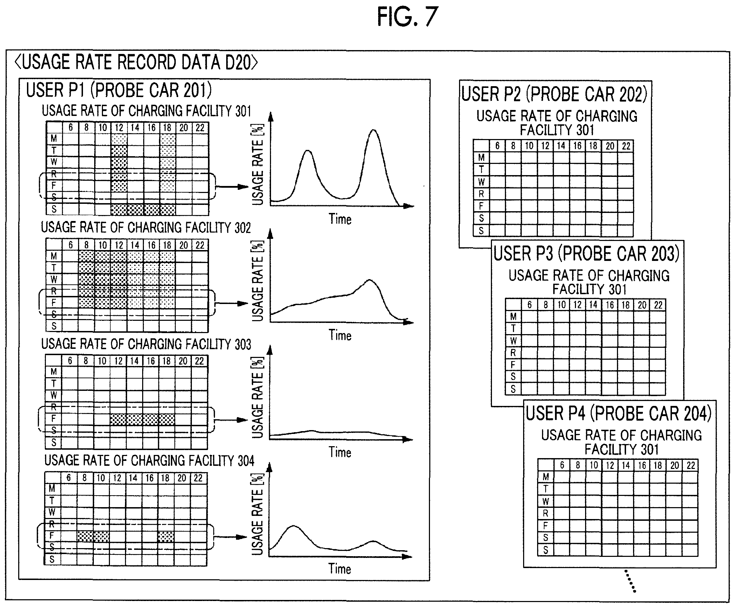

Fig. 7 is a fourth diagram illustrating a function of the individual model generation unit according to the first embodiment.

Next, the individual model generation unit 112 extracts a record value (electricity demand record data) of electricity demand at each of the charging facilities 301, 302, and so on, with reference to the previous vehicle probe data D1 (Fig. 3) which is stored in the probe data storage unit 120. In this embodiment, specifically, the electricity demand information extraction unit 112b of the individual model generation unit 112 extracts usage rate record data D20 indicating a record value of a usage rate in each time period as the record value of the electricity demand at each of the charging facilities 301, 302, and so on.

Here, the usage rate record data D20 is statistic data indicating frequencies (usage rates) at which the users P1, P2, and so on use the charging facilities 301, 302, and so on according to days of the week and time periods, based on the vehicle prove data D1 which is previously accumulated (see Fig. 7). For example, according to the usage rate record data D20 of the charging facility 301 with respect to the user P1, it can be shown that the frequency (rate) at which the user P1 uses the charging facility 301 around 6 p.m. over the entire weekdays is high (see Fig. 7).

Specifically, the electricity demand information extraction unit 112b extracts information about whether each of the charging facilities 301, 302, and so on is being used on each day of the week and in each time period based on vehicle position information or time period SOC information in the vehicle probe data D1 (Fig. 3), and calculates its frequency as the usage rate. With such a configuration, the electricity demand information extraction unit 112b obtains the usage rate record data D20 which is a previous record value of information (that is, a usage rate of each of the charging facilities 301, 302, and so on according to time periods) which is a prediction target, for each of the users P1, P2, and so on.

(Construction of individual models)

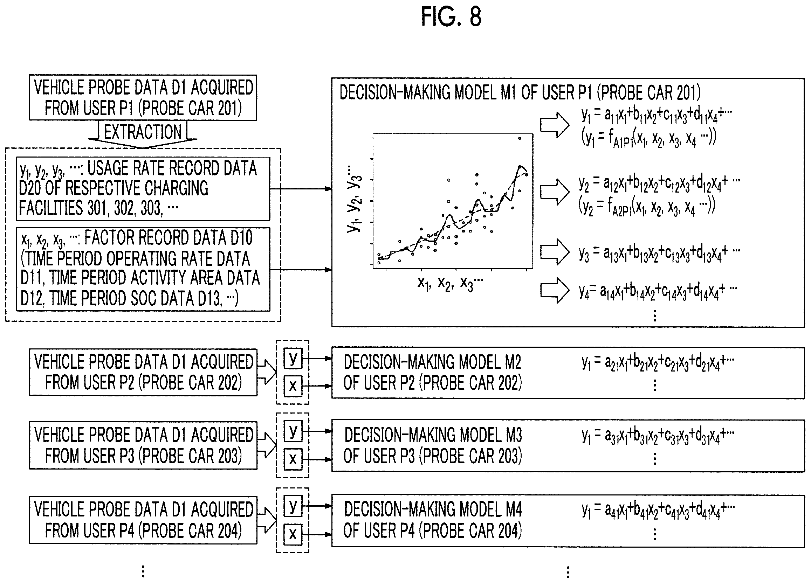

Fig. 8 is a fifth diagram illustrating a function of the individual model generation unit according to the first embodiment.

Next, a function of a model construction unit 112c that generates individual models based on the factor record data D10 and the usage rate record data D20 described above will be described with reference to Fig. 8.

The model construction unit 112c receives inputs of plural sets of factor record data D10 and usage rate record data D20 extracted from the vehicle probe data D1 of each of the probe cars 201, 202, and so on, accumulated in the probe data storage unit 120, and generates individual models M1, M2, and so on indicating correlations between the factor record data D10 and the usage rate record data D20 according to the users P1, P2, and so on (that is, according to the probe cars 201, 202, and so on).

Specifically, for example, the model construction unit 112c sets respective pieces of the factor record data D10 (the time period operating rate data D11, the time period action area data D12, and so on (Figs. 4 to 6)) which are record values of factor information relating to the user P1 (probe car 201) as factors $x_1$, $x_2$, and so on of the individual model M1. Further, the model construction unit 112c sets respective record values of usage rates of the charging facilities 301, 302, and so on extracted as the usage rate record data D20 (Fig. 7) relating to the user P1 as responses $y_1$, $y_2$, and so on. Here, the responses $y_1$, $y_2$, and so on are responses with respect to inputs of the factors $x_1$, $x_2$, and so on in the individual model M1.

Next, the model construction unit 112c generates the individual model M1 indicating the correlations of the responses $y_1$, $y_2$, and so on with respect to the factors $x_1$, $x_2$, and so on. The individual model M1 corresponds to the user P1 (probe car 201). As shown in Fig. 8, for example, the correlations between the rate $y_1$ at which the user P1 uses the charging facility 301 and the factors $x_1$, $x_2$, and so on are expressed as Expression (1).

$$y_1 = a_{11}x_1 + b_{11}x_2 + c_{11}x_3 + d_{11}x_4 + \cdots \qquad \cdots (1)$$

Here, coefficients a11, b11, and so on relating to the factors $x_1$, $x_2$, and so on in Expression (1) represent factor loads of the factors $x_1$, $x_2$, and so on. That is, a factor having a larger coefficient (factor load) has a stronger correlation with the response $y_1$ (that is, usage rate), while a factor having a smaller coefficient (factor load) has a weaker correlation with the response $y_1$.

For example, in a case where the factor $x_1$ is the time period operating rate data D11 and a value of the coefficient a11 is large, this means that a usage rate (response $y_1$) at which the user p1 uses the charging facility 301 is in a strong causal relationship with a time period operating rate (factor $x_1$). That is, this shows a feature of the user P1 indicating that "the user P1 approximately reliably performs charging in the charging facility 301 whenever the user P1 operates the probe car".

Similarly, in a case where the factor $x_2$ is the time period action area data D12 and a value of the coefficient b11 is small, this means that the causal relationship between the usage rate (response $y_1$) at which the user P1 uses the charging facility 301 and a time period activity area (factor $x_2$) is not recognized. That is, this shows a feature of the user P1 indicating that "the user P1 approximately necessarily uses the charging facility 301 in charging no matter which location an activity area to which the user P1 initially belongs is present at".

In this way, the individual model generation unit 112 according to this embodiment derives a bundle of expressions indicating the correlations between known factors $x_1$, $x_2$, and so on (factor record data D10) and known responses $y_1$, $y_2$, and so on (usage rate record data D20) which are previously acquired, and generates the individual model M1 in which a decision-making feature in charging relating to the user P1 is reflected.

As a method of deriving expressions (for example, the above-described Expression (1)) indicating respective correlations between known factors $x_1$, $x_2$, and so on and known responses $y_1$, $y_2$, and so on, for example, a simulation model construction method based on a support vector machine (SVM) or a neural network (NN), or the like which is a known model construction method may be used. More simply, a general least-squares method may be used. Furthermore, Expression (1) indicating the correlations is only an example, and alternatively, a more complicated expression (secondary function, exponential function, logarithmic function, or the like) indicating correlations may be used.

As shown in Fig. 8, the model construction unit 112c performs the same processes with respect to the users P2, P3, and so on (probe cars 202, 203, and so on), to thereby generate the individual models M2, M3, and so on in which features of the respective users are reflected. Then, the model construction unit 112c stores the generated individual models M1, M2, and so on in the individual model storage unit 121.

In the following description, a function indicating the correlations between the response $y_1$ relating to the charging facility 301 installed in the area A1 and the factors $x_1$, $x_2$, and so on relating to the users P1 (probe car 201) is expressed as Expression (2) (see Fig. 8).

$$y_1 = f_{A1P1}(x_1, x_2, x_3, x_4 \cdots) \qquad \cdots (2)$$

(Function of demand prediction computation unit)

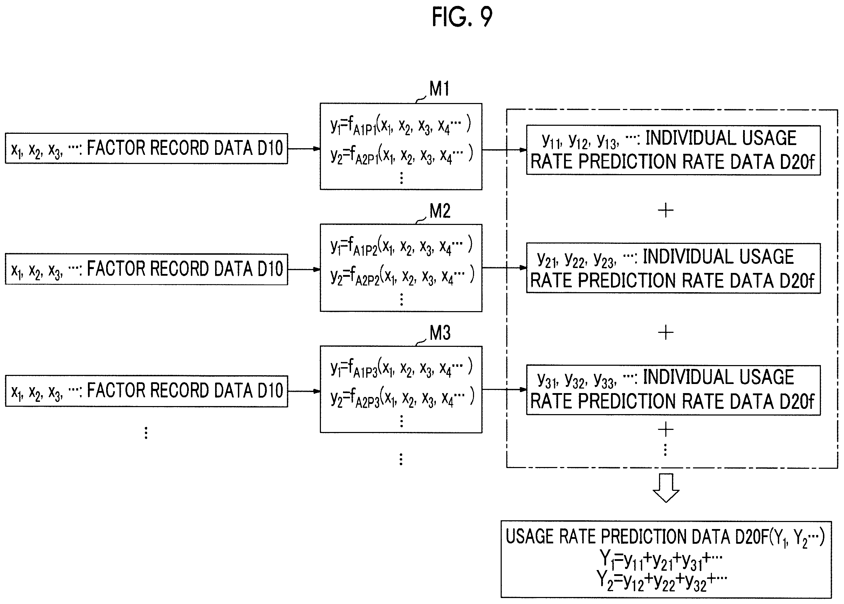

Fig. 9 is a first diagram illustrating a function of a demand prediction computation unit according to the first embodiment.

The demand prediction computation unit 113 calculates electricity demand prediction data indicating predicted values of electricity demand at each of the charging facilities 301, 302, and so on with respect to the users P1, P2, and so on (probe cars 201, 202, and so on), based on the respective individual models M1, M2, and so on which are stored in advance in the individual model storage unit 121. Specifically, the predicted values of the electricity demand in this embodiment refers to predicted values of usage rates in predetermined time periods in each of the charging facilities 301, 302, and so on. Further, the demand prediction computation unit 113 calculates usage rate prediction data D20F (electricity demand prediction data) indicating the predicted values of the usage rates.

Specifically, first, the demand prediction computation unit 113 receives an input of the vehicle probe data D1 of the user P1 (probe car 201) which is recently acquired, and acquires the factor record data D10 (factors $x_1$, $x_2$, and so on) based on the recent vehicle probe data D1 (see Fig. 9). The "the recently acquired vehicle probe data D1" is vehicle probe data D1 which is acquired from yesterday (before 24 hours) up to a current time point, for example.

Then, the demand prediction computation unit 113 inputs the factor record data D10 (factors $x_1$, $x_2$, and so on) to the individual model M1 corresponding to the user P1, and calculates its outputs (responses $y_1$, $y_2$, and so on). More specifically, the demand prediction computation unit 113 substitutes values of the respective factors $x_1$, $x_2$, and so on in respective functions (Expression (2) or the like) included in the individual model M1 to calculate the responses $y_1$, $y_2$,

and so on which are solutions of the respective functions.

Here, the calculated responses $y_1$, $y_2$, and so on are values calculated based on the individual model M1 in which the feature of the user P1 is reflected, and represents future usage rates (individual usage rate prediction data D20f) of the charging facilities 301, 302, and so on, of the user P1.

Similarly, the demand prediction computation unit 113 calculates the individual usage rate prediction data D20f of each of the users P2, P3, and so on based on the individual models M2, M3, and so on which are generated in advance (see Fig. 9). In the following description, predicted values of rates at which the user P1 uses the charging facilities 301, 302, and so on in a predetermined time period are expressed as $y_{11}$, $y_{12}$, and so on. Similarly, predicted values of rates at which the user P2 uses the charging facilities 301, 302, and so on in the same time period are expressed as $y_{21}$, $y_{22}$, and so on.

If the individual usage rate prediction data D20f for the entirety of the users P1, P2, and so on is calculated, the demand prediction computation unit 113 totals the entire individual usage rate prediction data D20f for each of the charging facilities 301, 302, and so on, and calculates a predicted value of a usage rate of each of the charging facilities 301, 302, and so on in each time period. For example, in a case where it is predicted that rates at which the respective users P1, P2, and so on use the charging facility 301 in a certain time period are $y_{11}$, $y_{21}$, and so on, the demand prediction computation unit 113 may calculate a predicted value $Y_1$ of a usage rate at the time period of the charging facility 301 as $Y_1 = y_{11} + y_{21} + Y_{31} + \ldots$. The demand prediction computation unit 113 similarly calculates predicted values $Y_2$, $Y_3$, and so on of usage rates of the other charging facilities 302, 303, and so on at the same time period (see Fig. 9).

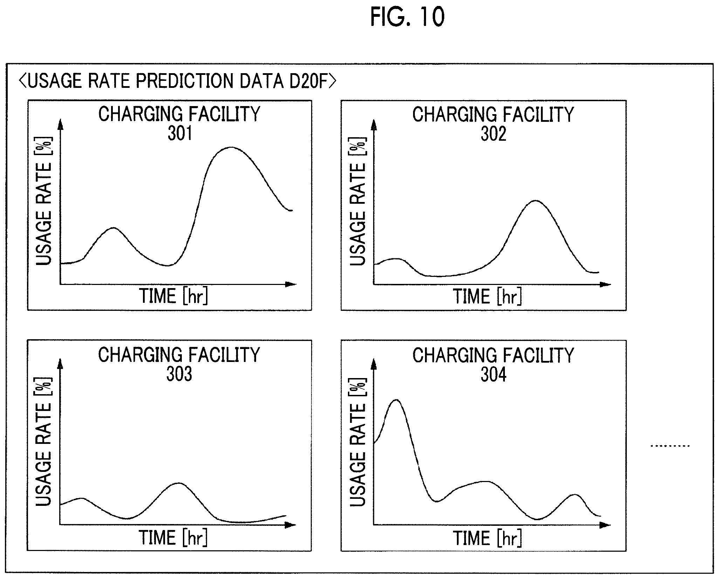

Fig. 10 is a second diagram illustrating a function of the demand prediction computation unit according to the first embodiment.

The demand prediction computation unit 113 acquires the usage rate prediction data D20F in which change in a usage rate in the near future (for example, within 24 hours from a current time point) for each of the charging facilities 301, 302, and so on is predicted, through the above-described processes (see Fig. 9) (see Fig. 10).

The demand prediction computation unit 113 outputs the usage rate prediction data D20F (electricity demand prediction data) for each of the charging facilities 301, 302, and so on acquired in this way to the electricity supply management device 400 through the data output unit 102. The electricity supply management device 400 makes a distribution plan with respect to each of the charging facilities 301, 302, and so on, based on a prediction result (usage rate prediction data D20F) of electricity demand for each of the charging facilities 301, 302, and so on, in reflection of the prediction result. For example, in a time period at which it is predicted that the usage rate of the charging facility 301 is high, the electricity supply management device 400 makes a distribution plan so that electricity supply suitable for its electricity demand is performed in the time period. Thus, the electricity supply system 1 can appropriately generate and supply necessary electricity depending on the electricity demand at each of the charging facilities 301, 302, and so on which is predicted in advance, and thus, it is possible to efficiently perform an electricity supply service management.

In the above-described embodiment, the electricity-demand prediction device 100 applies the prediction result in which the decision-making features (individual models) of the selected users P1, P2, and so on are reflected as they are, as a prediction result for all residents in the city T1. In this case, the users P1, P2, and so on of the probe cars 201, 202, and so on may be randomly selected from all residents in the city T1 which is a prediction target area. With such a configuration, it is possible to approximate features of a group of the users P1, P2, and so on who own the probe cars 201, 202, and so on as features of all residents in the city T1.

(Effects)

Since a charging time period or a charging location varies according to a traveling situation or preference of each individual user, it is difficult to accurately predict electricity demand by a simulation method in the related art. However, according to the electricity supply system 1 according to the above-described first embodiment, the electricity-demand prediction device 100 generates individual models according to users of electric cars, and performs simulation analysis in which a decision-making feature in charging for each of the users is reflected. Accordingly, a lifestyle, a sense of values, or the like of each user is reflected in the simulation analysis, and thus, it is possible to perform electricity demand prediction based on user's decision with high accuracy.

Further, the electricity-demand prediction device 100 generates plural individual models in which a decision-making feature of each user is reflected as described above, and approximates groups of the plural individuals as all resident groups in a city to predict electricity demand. Accordingly, it is possible to construct a simulation model with a small amount of data compared with the amount of record data necessary for directly modeling behavior trends of all resident groups.

In addition, in order to construct a simulation model with high accuracy, it is necessary to select a factor having a strong causal relationship with output (solution) to perform model construction. However, for example, in a case where behavior trends of all resident groups in the city T1 are used as a target of model construction, it is difficult to find which factor has a strong causal relationship with respect to the behavior trends of all resident groups. Accordingly, there is a limit to enhancing the accuracy of a model for reproducing the behavior trends of the group.

On the other hand, the electricity-demand prediction device 100 according to this embodiment models decision-making in charging at an individual level, and then, enlarges the model to be used for behavior trends at a group level. Here, it is possible to easily predict what information (that is, factor information) serves as an individual decision-making factor. For example, information about an operating state (whether or not a vehicle is being operated), a vehicle's position (whether or not a vehicle is close to a charging facility), an SOC (whether or not the SOC is small), or the like may be a strong decision-making factor in charging. Accordingly, in construction of individual models, it is possible to select a factor having a strong causal relationship to construct a simulation model, and thus, it is possible to further enhance the accuracy of prediction.

As described above, according to the electricity supply system 1 according to the first embodiment, it is possible to perform electricity demand prediction with high accuracy based on limited record data.

The configuration of the electricity supply system 1 is not limited to the above-described configuration, and for example, may be modified as follows.

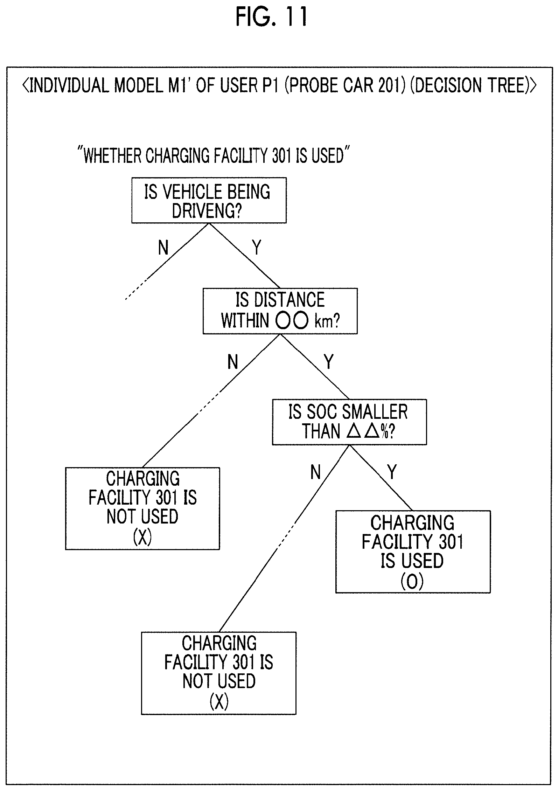

Fig. 11 is a diagram illustrating a function of an individual-model generation unit according to a modification example of the first embodiment.

The individual model generation unit 112 according to the first embodiment derives a bundle of functions of Expressions (1), (2), or the like based on the vehicle probe data D1 which is previously accumulated, with respect to correlations between the factor record data D10 (factors $x_1$, $x_2$, and so on) and the usage rate record data D20 (responses $y_1$, $y_2$, and so on), to construct individual models.

As a modification example thereof, for example, the individual model generation unit 112 may generate individual models M1', M2', and so on of the users P1, P2, and so on based on decision tree learning. For example, as shown in Fig. 11, the model construction unit 112c constructs an individual model M1' (decision tree model) for deriving a predicted value of a usage rate of the user P1 with respect to the charging facility 301 in each time period, based on the factor record data D10 and the usage rate record data D20.

For example, in a decision tree model shown in Fig. 11, a rate at which the user P1 leads to "The charging facility 301 is used." and a rate at which the user P1 leads to "The charging facility 301 is not used." are calculated through paths indicating whether conditions such as "Is a vehicle being operated?", "Is a distance within ○○ km?", "Is an SOC smaller than △△%?", and the like are satisfied at a current time point with respect to a question "Is the charging facility 301 used?", to thereby derive a predicted value of a usage rate.

In this way, the decision-making results (corresponding to the responses $y_1$, $y_2$, and so on) derived according to whether or not the plural conditions (corresponding to the factors $x_1$, $x_2$, and so on) which are the decision-making factors are satisfied are modeled.

With such a configuration, it is possible to easily write decision-making in charging for each of the users P1, P2, and so on, and to clarify what factor each of the users P1, P2, and so on leads to a decision for charging based on. Thus, it is possible to easily perform adjustment of electricity demand at each of the charging facilities 301, 302, and so on in installation of a new charging facility, in provision of service therein, or the like, for example.

In the above-described electricity supply system 1, a configuration in which usage rates according to time periods are predicted as electricity demand at each of the charging facilities 301, 302, and so on is described, but other embodiments are not limited to this configuration. For example, in an electricity supply system according to another embodiment, an amount of supplied electrical energy [kW] according to time periods at the charging facilities 301, 302, and so on may be used as prediction target information. Specifically, the electricity demand information extraction unit 112b of the individual model generation unit 112 may select record data (electricity supply record data) of the "amount of supplied electrical energy" at each of the charging facilities 301, 302, and so on with respect to the responses $y_1$, $y_2$, and so on which are prediction targets, to thereby acquire electricity supply prediction data which is a prediction result of the amount of supplied electrical energy.

<Second embodiment>

Next, an electricity supply system according to a second embodiment will be described.

In the electricity supply system according to the first embodiment, a configuration in which the prediction result in which the respective decision-making features (individual models) of the selected users P1, P2, and so on are reflected are applied as they are as the prediction result for all residents in the city T1 is described.

On the other hand, in the electricity supply system according to the second embodiment, similar individual models among plural individual models are grouped according to lifestyles, and a prediction result for all residents in the city T1 is corrected based on the ratio of the number of residents who match each lifestyle.

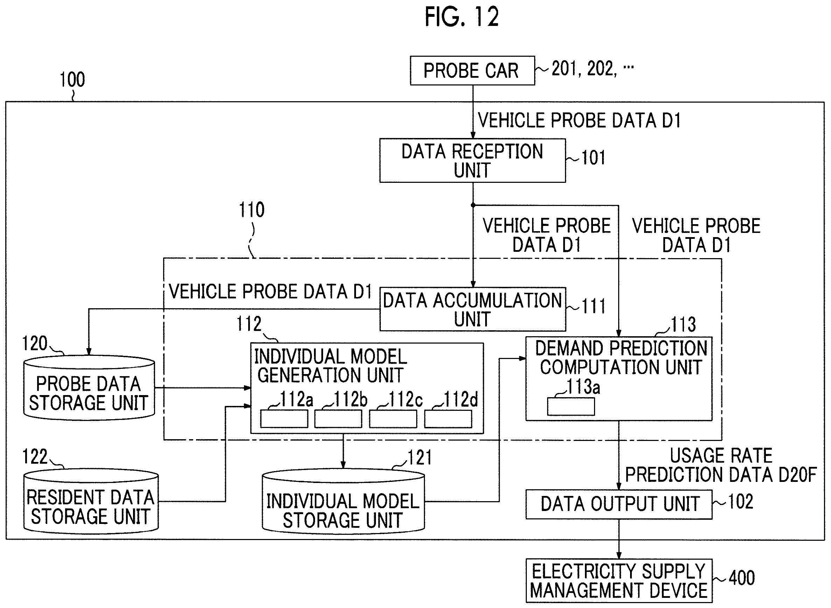

Fig. 12 is a diagram illustrating a functional configuration of the electricity demand prediction device according to the second embodiment.

In Fig. 12, the same reference numerals are given to the same functional configurations as in the first embodiment, and description thereof will not be repeated.

As shown in Fig. 12, the electricity-demand prediction device 100 according to this embodiment additionally includes a resident data storage unit 122 in which resident data in the city T1 is stored. The individual model generation unit 112 includes a lifestyle model generation unit 112d. Further, the demand prediction computation unit 113 includes a demand prediction result adjustment unit 113a.

The resident data storage unit 122 stores resident data in which information relating to individuals of the residents of the city T1 (for example, age, gender, residential area, job and place of work, commuting by car or not, and the like) is recorded. Furthermore, the resident data storage unit 122 stores in advance whether or not the residents are the users (users P1, P2, and so on) of the probe cars 201, 202, and so on.

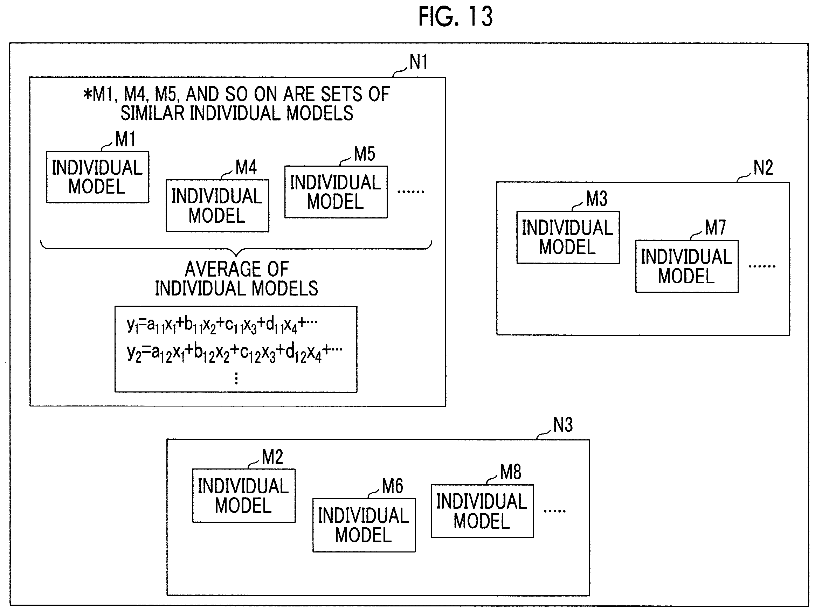

Fig. 13 is a diagram illustrating a function of the individual model generation unit according to the second embodiment.

The lifestyle model generation unit 112d of the individual model generation unit 112 according to this embodiment generates plural sets of individual models having similar correlations (functions of Expressions (1), (2), or the like) among the individual models M1, M2, and so on generated by the model construction unit 112c.

Specifically, the lifestyle model generation unit 112d compares factor loads (respective coefficients a11, b11, and so on in Expression (1)) of the individual models M1, M2, and so on to calculate a difference degree thereof. The difference degree may be calculated by the sum of errors for each factor load, for example. In a case where the calculated difference degree is smaller than a predetermined threshold value which is given in advance, the lifestyle model generation unit 112d determines that there are similar correlations. In this way, the lifestyle model generation unit 112d generates lifestyle models N1, N2, and so on that include sets of individual models having similar correlations among the individual models M1, M2, and so on (see Fig. 13).

Furthermore, the lifestyle model generation unit 112d calculates functions indicating correlations between the factors $x_1$, $x_2$, and so on and the responses $y_1$, $y_2$, and so on with respect to each of the lifestyle models N1, N2, and so on. Specifically, the lifestyle model generation unit 112d calculates an average of each bundle (Expressions (1), (2), or the like, see Fig. 8) of functions of the individual models M1, M2, and so on that belong to each of the lifestyle models N1, N2, and so on, to calculate a bundle of functions of each of the lifestyle models N1, N2, and so on (see the lifestyle model N1 in Fig. 13). With such a configuration, it is possible to alleviate the influence of errors based on unexpected behaviors deviated from personal habitual behaviors, and to enhance the accuracy of final prediction.

A method of calculating the functions of the lifestyle models N1, N2, and so on is not limited to the above-described method (average of individual models), and for example, a method of selecting a central value of functions that forms the individual models M1 and M2 may be used.

Then, the lifestyle model generation unit 112d refers to resident data with respect to the users P1, P4, P5, and so on corresponding to each of the individual models M1, M4, M5, and so on (see Fig. 13) that belong to the lifestyle model N1, for example. Further, the lifestyle model generation unit 112d extracts common resident data elements from the resident data with respect to the users P1, P4, P5, and so on. Then, the probe data storage unit 120 performs association of the extracted elements with respect to the lifestyle model N1. For example, if the lifestyle model N1 includes the individual models M1, M4, M5, and so on having a similarity of "a high operating rate in a commuting time period", it is possible to perform, from the resident data of the users P1, P4, P5, and so on who belong to the set of individual models, association of common data indicating that users belong to workers (car commuting group) who go to work by car to a predetermined place of work.

The lifestyle model generation unit 112d performs the same process with respect to the other lifestyle models N2, N3, and so on. The lifestyle model generation unit 112d may also perform association of common data indicating "housewife group" with respect to a set of individual models having a similarity of "a high operating rate during the day on weekdays", for example.

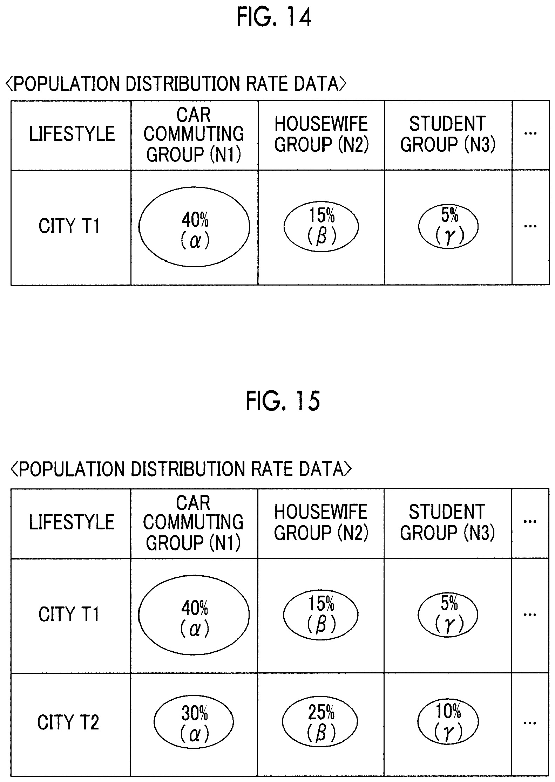

Fig. 14 is a diagram illustrating a function of a demand prediction computation unit according to the second embodiment.

A demand prediction computation unit 113 according to this embodiment calculates usage rate prediction data of each of the lifestyle models N1, N2, and so on generated by the lifestyle model generation unit 112d. This calculation may be performed by the same process as the process (Fig. 9) of the demand prediction computation unit 113 according to the first embodiment. Here, in the following description, usage rates at which the users (users P1, P4, P5, and so on) who belong to the lifestyle model N1 use the charging facilities 301, 302, and so on at each time period are expressed as $y_{11}$, $y_{12}$, and so on. Similarly, predicted values of rates at which the users who belong to the lifestyle model N2 use the charging facilities 301, 302, and so on in the same time period are expressed as $y_{21}$, $y_{22}$, and so on.

The demand prediction result adjustment unit 113a of the demand prediction computation unit 113 according to this embodiment calculates distribution rate data according to lifestyles in the city T1 with reference to resident data stored in the resident data storage unit 122. Here, Fig. 14 shows an example of population distribution rate data obtained by calculating the lifestyle distribution rate in the city T1 by the demand prediction result adjustment unit 113a. As shown in Fig. 14, the demand prediction result adjustment unit 113a calculates the ratio of residents who belong to the "car commuting group" to 40%, the ratio of residents who belong to the "housewife group" to 15%, and the like, with respect to the population of the city T1.

In a case where usage rates of the charging facility 301 at a certain time period in the lifestyle models N1, N2, and so on are predicted as $y_{11}$, $y_{21}$, and so on, the demand prediction result adjustment unit 113a calculates a predicted value $Y_1$ of the usage rates of the charging facility 301 in the time period according to Expression (3) .

$$Y_1 = \alpha \cdot y_{11} + \beta \cdot y_{21} + \gamma \cdot y_{31} + \cdots \qquad \cdots (3)$$

Here, coefficients $\alpha$, $\beta$, $\gamma$, and so on in Expression (3) represent distribution rates according to populations that belong to the lifestyle models N1, N2, N3, and so on in the city T1 (see Fig. 14). Similarly, the demand prediction result adjustment unit 113a calculates predicted values $Y_2$, $Y_3$, and so on of usage rates of the other charging facilities 302, 303, and so on in the same time period (see Expression (4))

$$Y_2 = \alpha \cdot y_{12} + \beta \cdot y_{22} + \gamma \cdot y_{32} + \cdots$$
$$Y_3 = \alpha \cdot y_{13} + \beta \cdot y_{23} + \gamma \cdot y_{33} + \cdots \qquad \Bigg\} \quad \cdots (4)$$
$$\vdots$$

With such a configuration, since the demand prediction result adjustment unit 113a performs weighting (multiplication of the coefficients $\alpha$, $\beta$, and $\gamma$) according to population distribution rates in the city T1 with respect to individual usage rate prediction data D20f (responses $y_{11}$, $y_{12}$, and so on) calculated according to the lifestyle models N1, N2, and so on and sums up the results, it is possible to further enhance the accuracy of electricity demand prediction in the entire city T1.

(Effects)

According to the electricity supply system 1 according to the above-described second embodiment, the electricity-demand prediction device 100 generates the lifestyle models N1, N2, and so on by grouping the generated individual models M1, M2, and so on according to common lifestyles. Furthermore, usage rates of charging facilities are predicted according to the lifestyle models N1, N2, and so on, and weighting depending on distribution rates of populations who belong to the respective lifestyles is performed for the respective prediction results. Accordingly, it is possible to enhance the accuracy of electricity demand prediction compared with a case where behavior trends of the users P1, P2, and so on who own the probe cars 201, 202, and so on are approximated as they are as behavior trends of all groups which are prediction targets.

Hereinbefore, according to the electricity supply system according to the second embodiment, it is possible to perform electricity demand prediction with high accuracy based on limited record data.

The above-described electricity supply system according to the second embodiment may be modified as follows.

Fig. 15 is a diagram illustrating a function of a demand prediction computation unit according to a modification example of the second embodiment.

A resident data storage unit 122 of an electricity-demand prediction device 100 according to this modification example stores resident data on residents who belong to a city T2, in addition to the city T1. In addition, as shown in Fig. 15, a demand prediction result adjustment unit 113a of a demand prediction computation unit 113 according to this modification example calculates population distribution rate data with respect to the city T2. Furthermore, the demand prediction result adjustment unit 113a calculates usage rate prediction data D20F based on population distribution rates with respect to the city T2, similar to Expression (3) and Expression (4). For example, in the case of the city T2 shown in Fig. 15, $\alpha$=30% $\beta$=25%, and $\gamma$=10% are substituted in Expression (3) and Expression (4) to calculate usage rate prediction data D20.

With such a configuration, it is possible to predict electricity demand with respect to the city T2 where data acquisition of the probe cars 201, 202, and so on is not performed, using the lifestyle models N1, N2, and so on constructed with respect to the city T1. Accordingly, it is possible to reduce efforts of prediction compared with a case where data is newly acquired in a different area to construct individual models.

<Third embodiment>

Next, an electricity supply system according to a third embodiment will be described.

In the electricity supply system according to the third embodiment, charging facilities 301, 302, and so on are configured to be able to acquire information relating to charging (charging facility data D2).

(Electricity-demand prediction device)

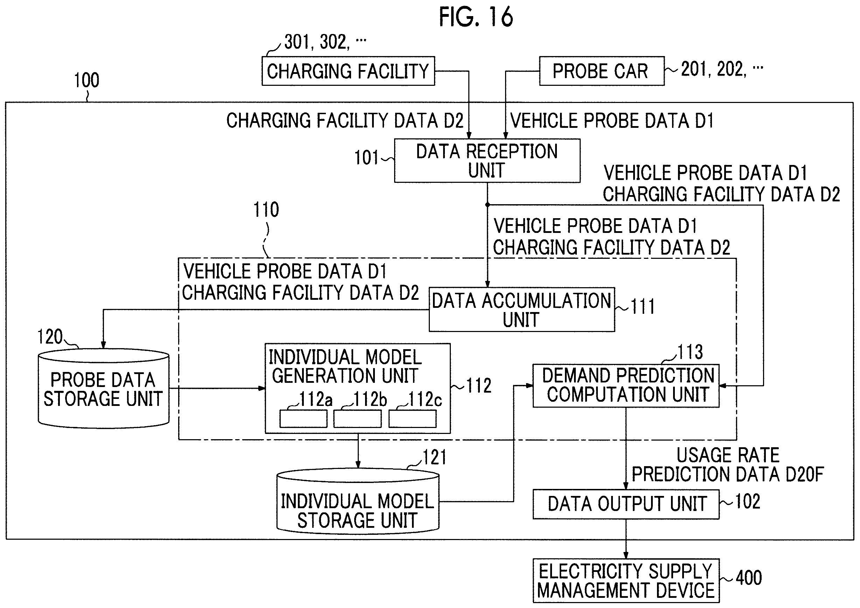

Fig. 16 is a diagram illustrating a functional configuration of an electricity-demand prediction device according to the third embodiment.

Each of the charging facilities 301, 302, and so on may record information relating to charging, and may output the recorded charging facility data D2 to the electricity-demand prediction device 100. In the charging facility data D2, information such as an occupancy rate of a charging device in each of the charging facilities 301, 302, and so on, a vehicle ID for specifying a vehicle that uses each facility, the amount of charged electric power, a charging method (fast charging or not, for example), usage fee, the presence or absence of added value (usability of point service, for example) is recorded.

A data accumulation unit 111 according to this embodiment receives both of vehicle probe data D1 and charging facility data D2 through a data reception unit 101, and stores the result in a probe data storage unit 120. Further, an individual model generation unit 112 generates individual models M1, M2, and so on (or lifestyle models N1, N2, and so on) based on both of the vehicle probe data D1 and the charging facility data D2 accumulated in the probe data storage unit 120. The generated individual models M1, M2, and so on are obtained in consideration of time period congestion levels, usage fee, the presence or absence of added value, or the like in each of the charging facilities 301, 302, and so on as decision-making factors in charging. Accordingly, the individual model generation unit 112 can generate individual models in which decision-making in charging for individual users is reflected with high accuracy.

(Effects)

Hereinbefore, according to the electricity supply system according to the third embodiment, the electricity-demand prediction device 100 constructs the individual models M1, M2, and so on based on the charging facility data D2 acquired from the charging facilities 301, 302, and so on, in addition to the vehicle probe data D1 acquired from the probe cars 201, 202, and so on. Thus, it is possible to generate individual models in which decision-making in charging for individual users is reflected with high accuracy, and to further enhance the accuracy of prediction.

A configuration in which the electricity-demand prediction device 100 according to the above-described third embodiment generates the individual models M1, M2, and so on based on both of the vehicle probe data D1 and the charging facility data D2 is described, but the electricity-demand prediction device 100 according to another embodiment may generate individual models only based on the charging facility data D2. For example, the factor information extraction unit 112a may check vehicle IDs of vehicles for which charging is performed, recorded with respect to each of the plural charging facilities 301, 302, and so on, to thereby generate individual models in which decision-making in charging for individual users associated with the vehicle IDs is reflected. Thus, it is possible to arrange a collection operation of the vehicle probe data D1 using the probe cars 201, 202, and so on, to thereby reduce efforts necessary for prediction.

In all of the electricity supply systems according to the above-described embodiments, the electricity supply management device 400 makes a distribution plan so that necessary minimum electricity suitable for a prediction result can be supplied, based on a prediction result of the electricity-demand prediction device 100, in reflection of the prediction result, to achieve an efficient operation. However, an electricity supply system according to another embodiment may be configured to include a request notification device that notifies each user of an electric car which belongs to the city T1 of a mail for refraining from using a predetermined charging facility at a specific time period according to the received prediction result, and for promoting usage of a predetermined charging facility at another specific time period as necessary. For example, in a case where the demand notification device receives a prediction that electricity demand for the charging facility 301 noticeably increases at a time period of 6 p.m. on a specific day, the demand notification device transmits a mail for requesting users having a high usage rate at the charging facility 301 to refrain from using the charging facility 301 in the time period and to use the charging facility 301 at another time period at which electricity demand is predicted to be low. Thus, each user can follow the request, to thereby make it possible to conveniently perform peak cut (peak shift) in electricity demand. Further, in this case, individual models may be constructed in consideration of how much influence the presence or absence of reception of the above-described usage refrain notification mail has as a decision-making factor in charging for each of the users P1, P2, and so on. Thus, it is possible to effectively select a delivery destination of the usage refrain notification mail.

Furthermore, in the above-described embodiments, it is assumed that each of the probe cars 201, 202, and so on is owned by each of the users P1, P2, and so on. That is, for example, it is assumed that the individual model M1 derived from the vehicle probe data D1 acquired in the probe car 201 reflects the decision-making feature of the user P1 who is an owner of the probe car 201.

However, in another embodiment, a configuration in which the probe cars 201, 202, and so on do not necessarily correspond to individuals (users P1, P2, and so on) one to one may be used. That is, like a family car or a company car, a configuration in which plural users (for example, user P1 and user P2) share and use a specific probe car 201 may be used. In this case, in the individual model M1 calculated based on the vehicle probe data D1 of the probe car 201, decision-making features in charging for the respective users P1, P2, and so on who share and use the probe car 201 are reflected together.

Furthermore, as described above, in a case where plural users share a specific probe car among the probe cars 201, 202, and so on, a configuration in which the specific probe car among the probe cars 201, 202, and so on dividedly acquires the vehicle probe data D1 for each of the users may also be used. For example, the probe cars 201, 202, and so on may receive identification information for identifying which one of the users P1, P2, and so on a current driver is at the start of driving. In this case, since the individual model M1 is calculated based on the vehicle probe data D1 divided for each of the users P1, P2, and so on, decision-making of each of the users P1, P2, and so on is reflected.

A program for realizing the functions of the electricity-demand prediction device 100 in the above-described embodiments may be recorded on a computer-readable recording medium, and a computer system may read the program recorded on the recording medium for execution, to perform the processes. Here, the "computer system" is configured to include hardware such as an OS or peripheral devices. In addition, the "computer system" is configured to include a WWW system including a home page provision environment (or a display environment). Furthermore, the "computer-readable recording medium" refers to a portable medium such as a flexible disc, a magneto-optical disc, a ROM, or a CD-ROM, or a storage medium such as a hard disk built in a computer system. Here, the "computer-readable recording medium" may include a recording medium that retains a program for a predetermined time, such as a volatile memory (RAM) in a computer system which serves as a server or a client in a case where the program is transmitted through a network such as the Internet or a communication line such as a telephone line.

Further, the program may be transmitted to another computer system from the computer system in which the program is stored in a storage device or the like through a transmission medium, or through transmission waves in the transmission medium. Here, the "transmission medium" that transmits the program refers to a medium that has a function of transmitting information, such as a network (communication network) such as the Internet or a communication line such as a telephone line. In addition, the program may realize a part of the above-described functions. Furthermore, the program may be a so-called differential file (differential program) capable of realizing the above-described functions in combination with a program stored in advance in a computer system.

Industrial Applicability

According to the above-described embodiments, it is possible to perform electricity demand prediction with high accuracy based on limited record data.

Reference Signs List

| | |
|---|---|
| 1 | Electricity supply system |
| 100 | Electricity-demand prediction device |
| 101 | Data reception unit |
| 102 | Data output unit |
| 110 | CPU |
| 111 | Data accumulation unit |
| 112 | Individual model generation unit |
| 112a | Factor information extraction unit |
| 112b | Electricity demand information extraction unit |
| 112c | Model construction unit |
| 112d | Lifestyle model generation unit |
| 113 | Demand prediction computation unit |
| 113a | Demand prediction result adjustment unit |
| 120 | Probe data storage unit |
| 121 | Individual model storage unit |
| 122 | Resident data storage unit |
| 201, 202, ... | Probe car |

301, 302, ...        Charging facility
400                  Electricity supply management device

**Claims**

1. An electricity-demand prediction device (100) comprising:

   a data reception unit (101) that is configured to receive an input of vehicle probe data in which a traveling state of a specific vehicle of a plurality of vehicles (201, 202, ...) is recorded, the traveling state including at least information indicating whether the specific vehicle is traveling or not, location information, and state of charge information indicating an amount of charge of a battery;
   an individual model generation unit (112) that is configured to extract a record value including at least an operating rate, a presence proportion in a predetermined area, and a charging rate of a battery as a record value of factor information indicating a decision-making factor for charging of the specific vehicle at a specific charging facility and a record value indicating electricity demand for the specific vehicle at the specific charging facility from the vehicle probe data received in the past, and to generate an individual model with respect to the specific vehicle or a user of the specific vehicle, the individual model indicating correlation of the record value indicating the electricity demand with respect to the record value of the factor information after extracting the record values; and
   a demand prediction computation unit (113) that is configured to calculate a predicted value of electricity demand for the specific vehicle at the specific charging facility by inputting factor information extracted from the most recently received vehicle probe data to the generated individual model.

2. The electricity-demand prediction device (100) according to claim 1,
   wherein the individual model generation unit (112) is configured to extract usage rate record data indicating usage rates of the specific vehicle at the specific charging facility according to time periods from the received vehicle probe data, as the record value of the electricity demand.

3. The electricity-demand prediction device (100) according to claim 1 or 2,
   wherein the individual model generation unit (112) is configured to construct a lifestyle model that includes a set of the plurality of individual models having similar correlations, and
   wherein the demand prediction computation unit (113) is configured to calculate a predicted value of electricity demand at each charging facility that belongs to the specific area by using a distribution rate of a population as a weighting, the distribution rate corresponding to the lifestyle model for drivers who drive vehicles in a specific area.

4. The electricity-demand prediction device (100) according to any one of claims 1 to 3,
   wherein the data reception unit (101) is further configured to receive an input of charging facility data which is information acquired from each charging facility, in which information relating to charging performed in the charging facility is recorded, and
   wherein the individual model generation unit (112) is configured to generate the individual model further indicating the correlation with the charging facility data.

5. An electricity supply system (1) comprising:

   the electricity-demand prediction device (100) according to any one of claims 1 to 4;
   a plurality of probe cars (201, 202, ...) configured to record a traveling state of a host vehicle; and
   an electricity supply management device (400) that is configured to adjust an electricity supply for each charging facility suitable for electricity demand at each charging facility predicted by the electricity-demand prediction device (100).

6. An electricity-demand prediction method comprising the steps of:

   receiving an input of vehicle probe data in which a traveling state of a specific vehicle of a plurality of vehicles (201, 202, ...) is recorded, the traveling state including at least information indicating whether the specific vehicle is traveling or not, location information, and state of charge information indicating an amount of charge of a battery;
   extracting a record value including at least an operating state, a presence proportion in a predetermined area, and a charging rate of a battery as a record value of factor information indicating a decision-making factor for charging of the specific vehicle at a specific charging facility and a record value indicating electricity demand for the specific vehicle at the specific charging facility from the vehicle probe data received in the past, and generating an individual model with respect to the specific vehicle or a user of the specific vehicle, the individual model indicating correlation of the record value indicating the electricity demand with respect to the record value of the factor information after extracting the record values; and

calculating a predicted value of electricity demand for the specific vehicle at the specific charging facility by inputting factor information extracted from the most recently received vehicle probe data to the generated individual model.

7. A program that causes a computer of an electricity-demand prediction device (100) to function as:

individual model generation means (112) for extracting a record value including at least an operating rate, a presence proportion in a predetermined area, and a charging rate of a battery as a record value of factor information indicating a decision-making factor for charging of a specific vehicle of a plurality of vehicles (201, 202, ...) at a specific charging facility and a record value indicating electricity demand for the specific vehicle at the specific charging facility from the vehicle probe data received in the past, and generating an individual model with respect to the specific vehicle or a user of the specific vehicle, the individual model indicating correlation of the record value indicating the electricity demand with respect to the record value of the factor information after extracting the record values; and

demand prediction computation means (113) for calculating a predicted value of electricity demand for the specific vehicle at the specific charging facility by inputting factor information extracted from the most recently received vehicle probe data to the generated individual model.

**Patentansprüche**

1. Eine Elektrizitätsbedarf-Vorhersagevorrichtung (100), aufweisend:

eine Datenempfangseinheit (101), die konfiguriert ist, um eine Eingabe von Fahrzeugsondendaten zu empfangen, in denen ein Fahrzustand eines spezifischen Fahrzeugs aus einer Vielzahl von Fahrzeugen (201, 202, ...) aufgezeichnet ist, wobei der Fahrzustand zumindest Informationen, die anzeigen, ob das spezifische Fahrzeug fährt oder nicht, Standortinformationen und Ladezustandsinformationen, die eine Ladungsmenge einer Batterie anzeigen, enthält;

eine Einzelmodell-Erzeugungseinheit (112), die konfiguriert ist, um einen Aufzeichnungswert, der zumindest eine Betriebsrate, einen Präsenzanteil in einem vorbestimmten Bereich und eine Laderate einer Batterie als einen Aufzeichnungswert von Faktorinformationen, die einen Entscheidungsfaktor für das Laden des spezifischen Fahrzeugs an einer spezifischen Ladeeinrichtung anzeigen, enthält, und einen Aufzeichnungswert, der den Elektrizitätsbedarf für das spezifische Fahrzeug an der spezifischen Ladeeinrichtung anzeigt, aus den in der Vergangenheit empfangenen Fahrzeugsondendaten zu extrahieren, und um ein Einzelmodell in Bezug auf das spezifische Fahrzeug oder einen Benutzer des spezifischen Fahrzeugs zu erzeugen, wobei das Einzelmodell die Korrelation des Aufzeichnungswertes, der den Elektrizitätsbedarf anzeigt, in Bezug auf den Aufzeichnungswert der Faktorinformationen nach Extraktion der Aufzeichnungswerte anzeigt; und

eine Bedarfsvorhersage-Berechnungseinheit (113), die konfiguriert ist, um einen vorhergesagten Wert des Elektrizitätsbedarfs für das spezifische Fahrzeug an der spezifischen Ladeeinrichtung zu berechnen, indem Faktorinformationen, die aus den zuletzt empfangenen Fahrzeugsondendaten extrahiert wurden, in das erzeugte Einzelmodell eingegeben werden.

2. Die Elektrizitätsbedarf-Vorhersagevorrichtung (100) nach Anspruch 1,
wobei die Einzelmodell-Erzeugungseinheit (112) konfiguriert ist, um Nutzungsraten-Aufzeichnungsdaten, die die Nutzungsraten des spezifischen Fahrzeugs an der spezifischen Ladeeinrichtung gemäß Zeitperioden anzeigen, aus den empfangenen Fahrzeugsondendaten als den Aufzeichnungswert des Elektrizitätsbedarfs zu extrahieren.

3. Die Elektrizitätsbedarf-Vorhersagevorrichtung (100) nach Anspruch 1 oder 2,
wobei die Einzelmodell-Erzeugungseinheit (112) konfiguriert ist, um ein Lebensstilmodell zu konstruieren, das einen Satz aus der Vielzahl von Einzelmodellen mit ähnlichen Korrelationen enthält, und
wobei die Bedarfsvorhersage-Berechnungseinheit (113) konfiguriert ist, um einen vorhergesagten Wert des Elektrizitätsbedarfs an jeder Ladeeinrichtung, die zu dem spezifischen Gebiet gehört, unter Verwendung einer Verteilungsrate einer Population als Gewichtung zu berechnen, wobei die Verteilungsrate zu dem Lebensstilmodell für Fahrer korrespondiert, die Fahrzeuge in einem spezifischen Gebiet fahren.

4. Die Elektrizitätsbedarf-Vorhersagevorrichtung (100) nach einem der Ansprüche 1 bis 3,
wobei die Datenempfangseinheit (101) ferner konfiguriert ist, um eine Eingabe von Ladeeinrichtungsdaten zu empfangen, die Informationen sind, die von jeder Ladeeinrichtung erfasst werden, in denen Informationen bezüglich des in der Ladeeinrichtung durchgeführten Ladens aufgezeichnet werden, und
wobei die Einzelmodell-Erzeugungseinheit (112) konfiguriert ist, um das Einzelmodell zu erzeugen, das ferner die Korrelation mit den Ladeeinrichtungsdaten anzeigt.

5. Ein Elektrizitätsversorgungssystem (1), aufweisend:

die Elektrizitätsbedarf-Vorhersagevorrichtung (100) gemäß einem der Ansprüche 1 bis 4;
eine Vielzahl von Sondenwagen (201, 202, ...), die konfiguriert sind, um einen Fahrzustand eines Host-Fahrzeugs aufzeichnen; und
eine Elektrizitätsversorgungs-Verwaltungsvorrichtung (400), die konfiguriert ist, um für jede Ladeeinrichtung eine Elektrizitätsversorgung anzupassen, die für den von der Elektrizitätsbedarf-Vorhersagevorrichtung (100) vorhergesagten Elektrizitätsbedarf an jeder Ladeeinrichtung geeignet ist.

6. Ein Elektrizitätsbedarf-Vorhersageverfahren, das die folgenden Schritte aufweist:

Empfangen einer Eingabe von Fahrzeugsondendaten, in denen ein Fahrzustand eines spezifischen Fahrzeugs aus einer Vielzahl von Fahrzeugen (201, 202, ...) aufgezeichnet ist, wobei der Fahrzustand zumindest Informationen, die anzeigen, ob das spezifische Fahrzeug fährt oder nicht, Standortinformationen und Ladezustandsinformationen, die eine Ladungsmenge einer Batterie anzeigen, enthält;
Extrahieren eines Aufzeichnungswertes einschließlich zumindest eines Betriebszustandes, eines Präsenzanteils in einem vorbestimmten Bereich und einer Laderate einer Batterie als ein Aufzeichnungswert von Faktorinformationen, die einen Entscheidungsfaktor für das Laden des spezifischen Fahrzeugs an einer spezifischen Ladeeinrichtung anzeigen, und eines Aufzeichnungswertes, der den Elektrizitätsbedarf für das spezifische Fahrzeug an der spezifischen Ladeeinrichtung anzeigt, aus den in der Vergangenheit empfangenen Fahrzeugsondendaten, und Erzeugen eines Einzelmodells in Bezug auf das spezifische Fahrzeug oder einen Benutzer des spezifischen Fahrzeugs, wobei das Einzelmodell die Korrelation des Aufzeichnungswertes, der den Elektrizitätsbedarf in Bezug auf den Aufzeichnungswert der Faktorinformationen anzeigt, nach dem Extrahieren der Aufzeichnungswerte anzeigt; und
Berechnen eines vorhergesagten Wertes des Elektrizitätsbedarfs für das spezifische Fahrzeug an der spezifischen Ladeeinrichtung, indem Faktorinformationen, die aus den zuletzt empfangenen Fahrzeugsondendaten extrahiert wurden, in das erzeugte Einzelmodell eingegeben werden.

7. Ein Programm, das bewirkt, dass ein Computer einer Elektrizitätsbedarf-Vorhersagevorrichtung (100) als Folgendes fungiert:

eine Einzelmodell-Erzeugungseinrichtung (112) zum Extrahieren eines Aufzeichnungswertes, der zumindest eine Betriebsrate, einen Präsenzanteil in einem vorbestimmten Bereich und eine Laderate einer Batterie als einen Aufzeichnungswert von Faktorinformationen enthält, die einen Entscheidungsfaktor für das Laden eines spezifischen Fahrzeugs aus einer Vielzahl von Fahrzeugen (201, 202, ...) an einer spezifischen Ladeeinrichtung anzeigen, und eines Aufzeichnungswertes, der den Elektrizitätsbedarf für das spezifische Fahrzeug an der spezifischen Ladeeinrichtung aus den in der Vergangenheit empfangenen Fahrzeugsondendaten anzeigt, und Erzeugen eines Einzelmodells in Bezug auf das spezifische Fahrzeug oder einen Benutzer des spezifischen Fahrzeugs, wobei das Einzelmodell die Korrelation des Aufzeichnungswertes, der den Elektrizitätsbedarf anzeigt, in Bezug auf den Aufzeichnungswert der Faktorinformationen nach Extraktion der Aufzeichnungswerte anzeigt; und
eine Bedarfsvorhersage-Berechnungseinrichtung (113) zum Berechnen eines vorhergesagten Wertes des Elektrizitätsbedarfs für das spezifische Fahrzeug an der spezifischen Ladeeinrichtung, indem Faktorinformationen, die aus den zuletzt empfangenen Fahrzeugsondendaten extrahiert wurden, in das erzeugte Einzelmodell eingegeben werden.

**Revendications**

1. Dispositif de prédiction de demande en électricité (100) comprenant :

   une unité de réception de données (101) qui est configurée pour recevoir une entrée de données de sonde de véhicule dans laquelle un état de déplacement d'un véhicule spécifique d'une pluralité de véhicules (201, 202...) est enregistré, l'état de déplacement comportant au moins des informations indiquant si le véhicule spécifique se déplace ou non, des informations d'emplacement, et des informations d'état de charge indiquant une quantité de charge d'une batterie ;
   une unité de génération de modèle individuel (112) qui est configurée pour extraire une valeur d'enregistrement comportant au moins un taux de fonctionnement, une proportion de présence dans une zone prédéterminée, et un taux de charge d'une batterie en tant que valeur d'enregistrement d'informations de facteur indiquant un facteur décisionnel pour la charge du véhicule spécifique au niveau d'une installation de charge spécifique et une valeur d'enregistrement indiquant une demande en électricité pour le véhicule spécifique au niveau de l'installation de charge spécifique à partir des données de sonde de véhicule reçues dans le passé, et pour générer un modèle individuel vis-à-vis du véhicule spécifique ou d'un utilisateur du véhicule spécifique, le modèle individuel indiquant une corrélation de la valeur d'enregistrement indiquant la demande en électricité vis-à-vis de la valeur d'enregistrement des informations de facteur après extraction des valeurs d'enregistrement ; et
   une unité de calcul informatique de prédiction de demande (113) qui est configurée pour calculer une valeur prédite de demande en électricité pour le véhicule spécifique au niveau de l'installation de charge spécifique par fourniture en entrée d'informations de facteur extraites des données de sonde de véhicule reçues le plus récemment au modèle individuel généré.

2. Dispositif de prédiction de demande en électricité (100) selon la revendication 1,
   dans lequel l'unité de génération de modèle individuel (112) est configurée pour extraire des données d'enregistrement de taux d'utilisation indiquant des taux d'utilisation du véhicule spécifique au niveau de l'installation de charge spécifique selon des périodes à partir des données de sonde de véhicule reçues, en tant que valeur d'enregistrement de la demande en électricité.

3. Dispositif de prédiction de demande en électricité (100) selon la revendication 1 ou 2,
   dans lequel l'unité de génération de modèle individuel (112) est configurée pour construire un modèle de mode de vie qui comporte un ensemble de la pluralité de modèles individuels ayant des corrélations similaires, et
   dans lequel l'unité de calcul informatique de prédiction de demande (113) est configurée pour calculer une valeur prédite de demande en électricité au niveau de chaque installation de charge spécifique qui appartient à la zone spécifique en utilisant un taux de distribution d'une population en tant que pondération, le taux de distribution correspondant au modèle de mode de vie pour des conducteurs qui conduisent des véhicules dans une zone spécifique.

4. Dispositif de prédiction de demande en électricité (100) selon l'une quelconque des revendications 1 à 3,
   dans lequel l'unité de réception de données (101) est en outre configurée pour recevoir une entrée de données d'installation de charge qui représente des informations acquises auprès de chaque installation de charge, dans laquelle des informations concernant une charge réalisée dans l'installation de charge sont enregistrées, et
   dans lequel l'unité de génération de modèle individuel (112) est configurée pour générer le modèle individuel indiquant en outre la corrélation avec les données d'installation de charge.

5. Système d'alimentation en électricité (1) comprenant :

   le dispositif de prédiction de demande en électricité (100) selon l'une quelconque des revendications 1 à 4 ;
   une pluralité de voitures sondes (201, 202, ...) configurées pour enregistrer un état de déplacement d'un véhicule hôte ; et
   un dispositif de gestion d'alimentation en électricité (400) qui est configuré pour ajuster une alimentation en électricité pour chaque installation de charge appropriée pour une demande en électricité au niveau de chaque installation de charge prédite par le dispositif de prédiction de demande en électricité (100).

6. Procédé de prédiction de demande en électricité comprenant les étapes de :

   réception d'une entrée de données de sonde de véhicule dans laquelle un état de déplacement d'un véhicule spécifique d'une pluralité de véhicules (201, 202, ...) est enregistré, l'état de déplacement comportant au moins des informations indiquant si le véhicule spécifique se déplace ou non, des informations d'emplacement, et des informations d'état de charge indiquant une quantité de charge d'une batterie ;

extraction d'une valeur d'enregistrement comportant au moins un état de fonctionnement, une proportion de présence dans une zone prédéterminée, et un taux de charge d'une batterie en tant que valeur d'enregistrement d'informations de facteur indiquant un facteur décisionnel pour la charge du véhicule spécifique au niveau d'une installation de charge spécifique et d'une valeur d'enregistrement indiquant une demande en électricité pour le véhicule spécifique au niveau de l'installation de charge spécifique à partir des données de sonde de véhicule reçues dans le passé, et génération d'un modèle individuel vis-à-vis du véhicule spécifique ou d'un utilisateur du véhicule spécifique, le modèle individuel indiquant une corrélation de la valeur d'enregistrement indiquant la demande en électricité vis-à-vis de la valeur d'enregistrement des informations de facteur après extraction des valeurs d'enregistrement ; et

calcul d'une valeur prédite de demande en électricité pour le véhicule spécifique au niveau de l'installation de charge spécifique par fourniture en entrée d'informations de facteur extraites à partir des données de sonde de véhicule reçues le plus récemment au modèle individuel généré.

**7.** Programme qui amène un ordinateur d'un dispositif de prédiction de demande en électricité (100) à fonctionner comme :

des moyens de génération de modèle individuel (112) pour extraire une valeur d'enregistrement comportant au moins un taux de fonctionnement, une proportion de présence dans une zone prédéterminée, et un taux de charge d'une batterie en tant que valeur d'enregistrement d'informations de facteur indiquant un facteur décisionnel pour la charge d'un véhicule spécifique d'une pluralité de véhicules (201, 202, ...) au niveau d'une installation de charge spécifique et une valeur d'enregistrement indiquant une demande en électricité pour le véhicule spécifique au niveau de l'installation de charge spécifique à partir de données de sonde de véhicule reçues dans le passé, et générer un modèle individuel vis-à-vis du véhicule spécifique ou d'un utilisateur du véhicule spécifique, le modèle individuel indiquant une corrélation de la valeur d'enregistrement indiquant la demande en électricité vis-à-vis de la valeur d'enregistrement des informations de facteur après extraction des valeurs d'enregistrement ; et

des moyens de calcul informatique de prédiction de demande (113) pour calculer une valeur prédite de demande en électricité pour le véhicule spécifique au niveau de l'installation de charge spécifique par fourniture en entrée d'informations de facteur extraites des données de sonde de véhicule reçues le plus récemment au modèle individuel généré.

FIG. 1

EP 3 076 513 B1

# FIG. 2

PROBE CAR ~201, 202, ...

100

VEHICLE PROBE DATA D1

DATA RECEPTION UNIT ~101

110

VEHICLE PROBE DATA D1     VEHICLE PROBE DATA D1

VEHICLE PROBE DATA D1    DATA ACCUMULATION UNIT ~111

120

PROBE DATA STORAGE UNIT

INDIVIDUAL MODEL GENERATION UNIT ~112

112a  112b  112c

113

DEMAND PREDICTION COMPUTATION UNIT

121

INDIVIDUAL MODEL STORAGE UNIT

USAGE RATE PREDICTION DATA D20F

DATA OUTPUT UNIT ~102

ELECTRICITY SUPPLY MANAGEMENT DEVICE ~400

EP 3 076 513 B1

# FIG. 3

<VEHICLE PROBE DATA D1>

| VEHICLE ID | DATE | TIME | OPERATING STATE | VEHICLE POSITION | SOC |
|---|---|---|---|---|---|
| ID : XXXXXXXXXX | 01/xx/2012(MON) | 10:00 | ON | LATITUDE○○ : LONGITUDE×× | 42% |
| ID : XXXXXXXXXX | 01/xx/2012(MON) | 10:30 | ON | LATITUDE○○ : LONGITUDE×× | 40% |
| ID : XXXXXXXXXX | 01/xx/2012(MON) | 11:00 | ON | LATITUDE○○ : LONGITUDE×× | 39% |
| ID : XXXXXXXXXX | 01/xx/2012(MON) | 11:30 | OFF | LATITUDE○○ : LONGITUDE×× | 39% |
| ⋮ | ⋮ | ⋮ | ⋮ | ⋮ | ⋮ |

# FIG. 4

〈TIME PERIOD OPERATING RATE DATA D11〉

USER P1 (PROBE CAR 201)

|   | 6 | 8 | 10 | 12 | 14 | 16 | 18 | 20 | 22 |
|---|---|---|----|----|----|----|----|----|----|
| M |   |   |    |    |    |    |    |    |    |
| T |   |   |    |    |    |    |    |    |    |
| W |   |   |    |    |    |    |    |    |    |
| R |   |   |    |    |    |    |    |    |    |
| F |   |   |    |    |    |    |    |    |    |
| S |   |   |    |    |    |    |    |    |    |
| S |   |   |    |    |    |    |    |    |    |

TIME PERIOD OPERATING RATE

OPERATING RATE [%]

45
40
35
30
25
20
15
10
5
0

0 2 4 6 8 10 12 14 16 18 20 22 24 26 28 30 32 34 36 38 40 42 44 46

TIME

USER P2 (PROBE CAR 202)

|   | 6 | 8 | 10 | 12 | 14 | 16 | 18 | 20 | 22 |
|---|---|---|----|----|----|----|----|----|----|
| M |   |   |    |    |    |    |    |    |    |
| T |   |   |    |    |    |    |    |    |    |
| W |   |   |    |    |    |    |    |    |    |
| R |   |   |    |    |    |    |    |    |    |
| F |   |   |    |    |    |    |    |    |    |
| S |   |   |    |    |    |    |    |    |    |
| S |   |   |    |    |    |    |    |    |    |

USER P3 (PROBE CAR 203)

|   | 6 | 8 | 10 | 12 | 14 | 16 | 18 | 20 | 22 |
|---|---|---|----|----|----|----|----|----|----|
| M |   |   |    |    |    |    |    |    |    |
| T |   |   |    |    |    |    |    |    |    |
| W |   |   |    |    |    |    |    |    |    |
| R |   |   |    |    |    |    |    |    |    |
| F |   |   |    |    |    |    |    |    |    |
| S |   |   |    |    |    |    |    |    |    |
| S |   |   |    |    |    |    |    |    |    |

USER P4 (PROBE CAR 204)

|   | 6 | 8 | 10 | 12 | 14 | 16 | 18 | 20 | 22 |
|---|---|---|----|----|----|----|----|----|----|
| M |   |   |    |    |    |    |    |    |    |
| T |   |   |    |    |    |    |    |    |    |
| W |   |   |    |    |    |    |    |    |    |
| R |   |   |    |    |    |    |    |    |    |
| F |   |   |    |    |    |    |    |    |    |
| S |   |   |    |    |    |    |    |    |    |
| S |   |   |    |    |    |    |    |    |    |

# FIG. 5

⟨TIME PERIOD ACTIVITY AREA DATA D12⟩

# FIG. 6

〈TIME PERIOD SOC DATA D13〉

**USER P2 (PROBE CAR 202)**

**USER P1 (PROBE CAR 201)**

SOCs ACCORDING TO TIME PERIODS

**USER P3 (PROBE CAR 203)**

**USER P4 (PROBE CAR 204)**

EP 3 076 513 B1

# FIG. 7

⟨USAGE RATE RECORD DATA D20⟩

# FIG. 8

VEHICLE PROBE DATA D1 ACQUIRED FROM USER P1 (PROBE CAR 201)

EXTRACTION

$y_1, y_2, y_3, \cdots$: USAGE RATE RECORD DATA D20 OF RESPECTIVE CHARGING FACILITIES 301, 302, 303, $\cdots$

$x_1, x_2, x_3, \cdots$: FACTOR RECORD DATA D10 (TIME PERIOD OPERATING RATE DATA D11, TIME PERIOD ACTIVITY AREA DATA D12, TIME PERIOD SOC DATA D13, $\cdots$)

DECISION-MAKING MODEL M1 OF USER P1 (PROBE CAR 201)

$y_1 = a_{11}x_1 + b_{11}x_2 + c_{11}x_3 + d_{11}x_4 + \cdots$
$(y_1 = f_{A1P1}(x_1, x_2, x_3, x_4 \cdots))$

$y_2 = a_{12}x_1 + b_{12}x_2 + c_{12}x_3 + d_{12}x_4 + \cdots$
$(y_2 = f_{A2P1}(x_1, x_2, x_3, x_4 \cdots))$

$y_3 = a_{13}x_1 + b_{13}x_2 + c_{13}x_3 + d_{13}x_4 + \cdots$

$y_4 = a_{14}x_1 + b_{14}x_2 + c_{14}x_3 + d_{14}x_4 + \cdots$

$y_1, y_2, y_3 \cdots$ (vertical axis)
$x_1, x_2, x_3 \cdots$ (horizontal axis)

VEHICLE PROBE DATA D1 ACQUIRED FROM USER P2 (PROBE CAR 202)

$y$ $x$

DECISION-MAKING MODEL M2 OF USER P2 (PROBE CAR 202)
$y_1 = a_{21}x_1 + b_{21}x_2 + c_{21}x_3 + d_{21}x_4 + \cdots$

VEHICLE PROBE DATA D1 ACQUIRED FROM USER P3 (PROBE CAR 203)

$y$ $x$

DECISION-MAKING MODEL M3 OF USER P3 (PROBE CAR 203)
$y_1 = a_{31}x_1 + b_{31}x_2 + c_{31}x_3 + d_{31}x_4 + \cdots$

VEHICLE PROBE DATA D1 ACQUIRED FROM USER P4 (PROBE CAR 204)

$y$ $x$

DECISION-MAKING MODEL M4 OF USER P4 (PROBE CAR 204)
$y_1 = a_{41}x_1 + b_{41}x_2 + c_{41}x_3 + d_{41}x_4 + \cdots$

EP 3 076 513 B1

## FIG. 9

M1

$x_1, x_2, x_3, \cdots$: FACTOR RECORD DATA D10 → $y_1 = f_{A1P1}(x_1, x_2, x_3, x_4\cdots)$
$y_2 = f_{A2P1}(x_1, x_2, x_3, x_4\cdots)$
⋮

→ $y_{11}, y_{12}, y_{13}, \cdots$: INDIVIDUAL USAGE RATE PREDICTION RATE DATA D20f

+

M2

$x_1, x_2, x_3, \cdots$: FACTOR RECORD DATA D10 → $y_1 = f_{A1P2}(x_1, x_2, x_3, x_4\cdots)$
$y_2 = f_{A2P2}(x_1, x_2, x_3, x_4\cdots)$
⋮

→ $y_{21}, y_{22}, y_{23}, \cdots$: INDIVIDUAL USAGE RATE PREDICTION RATE DATA D20f

+

M3

$x_1, x_2, x_3, \cdots$: FACTOR RECORD DATA D10 → $y_1 = f_{A1P3}(x_1, x_2, x_3, x_4\cdots)$
$y_2 = f_{A2P3}(x_1, x_2, x_3, x_4\cdots)$
⋮

→ $y_{31}, y_{32}, y_{33}, \cdots$: INDIVIDUAL USAGE RATE PREDICTION RATE DATA D20f

+

⋮

⋮

⇩

USAGE RATE PREDICTION DATA D20F($Y_1, Y_2\cdots$)
$Y_1 = y_{11} + y_{21} + y_{31} + \cdots$
$Y_2 = y_{12} + y_{22} + y_{32} + \cdots$

EP 3 076 513 B1

# FIG. 10

〈USAGE RATE PREDICTION DATA D20F〉

CHARGING FACILITY 301
USAGE RATE [%] / TIME [hr]

CHARGING FACILITY 302
USAGE RATE [%] / TIME [hr]

CHARGING FACILITY 303
USAGE RATE [%] / TIME [hr]

CHARGING FACILITY 304
USAGE RATE [%] / TIME [hr]

EP 3 076 513 B1

# FIG. 11

〈INDIVIDUAL MODEL M1' OF USER P1 (PROBE CAR 201) (DECISION TREE)〉

"WHETHER CHARGING FACILITY 301 IS USED"

```
              ┌─────────────────┐
              │ IS VEHICLE BEING│
              │    DRIVENG?     │
              └─────────────────┘
            N /               \ Y
             /                 \
                      ┌─────────────────┐
                      │   IS DISTANCE   │
                      │  WITHIN ○○ km?  │
                      └─────────────────┘
                    N /               \ Y
                     /                 \
                                 ┌─────────────────┐
                                 │  IS SOC SMALLER │
                                 │  THAN △△%?      │
                                 └─────────────────┘
                               N /               \ Y
      ┌──────────────┐          /                 \
      │   CHARGING   │                     ┌──────────────┐
      │ FACILITY 301 IS│                   │   CHARGING   │
      │   NOT USED   │                     │ FACILITY 301 │
      │     (X)      │                     │   IS USED    │
      └──────────────┘                     │     (O)      │
                                           └──────────────┘
                    ┌──────────────┐
                    │   CHARGING   │
                    │ FACILITY 301 IS│
                    │   NOT USED   │
                    │     (X)      │
                    └──────────────┘
```

FIG. 12

PROBE CAR ~201, 202, ⋯

VEHICLE PROBE DATA D1

DATA RECEPTION UNIT ~101

VEHICLE PROBE DATA D1

VEHICLE PROBE DATA D1

VEHICLE PROBE DATA D1

DATA ACCUMULATION UNIT ~111

VEHICLE PROBE DATA D1

INDIVIDUAL MODEL GENERATION UNIT ~112

112a  112b  112c  112d

INDIVIDUAL MODEL STORAGE UNIT ~121

DEMAND PREDICTION COMPUTATION UNIT ~113

113a

USAGE RATE PREDICTION DATA D20F

DATA OUTPUT UNIT ~102

ELECTRICITY SUPPLY MANAGEMENT DEVICE ~400

110

100

PROBE DATA STORAGE UNIT ~120

RESIDENT DATA STORAGE UNIT ~122

32

## FIG. 13

*M1, M4, M5, AND SO ON ARE SETS OF SIMILAR INDIVIDUAL MODELS

N1

M1 — INDIVIDUAL MODEL
M4 — INDIVIDUAL MODEL
M5 — INDIVIDUAL MODEL ......

AVERAGE OF INDIVIDUAL MODELS

$$y_1 = a_{11}x_1 + b_{11}x_2 + c_{11}x_3 + d_{11}x_4 + \cdots$$
$$y_2 = a_{12}x_1 + b_{12}x_2 + c_{12}x_3 + d_{12}x_4 + \cdots$$
$$\vdots$$

N2

M3 — INDIVIDUAL MODEL
M7 — INDIVIDUAL MODEL ......

N3

M2 — INDIVIDUAL MODEL
M6 — INDIVIDUAL MODEL
M8 — INDIVIDUAL MODEL .....

EP 3 076 513 B1

# FIG. 14

⟨POPULATION DISTRIBUTION RATE DATA⟩

| LIFESTYLE | CAR COMMUTING GROUP (N1) | HOUSEWIFE GROUP (N2) | STUDENT GROUP (N3) | ... |
|---|---|---|---|---|
| CITY T1 | 40% ($\alpha$) | 15% ($\beta$) | 5% ($\gamma$) | ... |

# FIG. 15

⟨POPULATION DISTRIBUTION RATE DATA⟩

| LIFESTYLE | CAR COMMUTING GROUP (N1) | HOUSEWIFE GROUP (N2) | STUDENT GROUP (N3) | ... |
|---|---|---|---|---|
| CITY T1 | 40% ($\alpha$) | 15% ($\beta$) | 5% ($\gamma$) | ... |
| CITY T2 | 30% ($\alpha$) | 25% ($\beta$) | 10% ($\gamma$) | ... |

## FIG. 16

**EP 3 076 513 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014038747 A
- JP 2012115066 A
- US 2011246252 A1